# EUROPEAN PATENT APPLICATION

(11) **EP 4 811 173 A1**
(43) Date of publication of application: **23.09.2026**
(21) Application number: 26165531.0
(22) Date of filing: 17.03.2026
(51) Int. Cl.: G06F 16/901

(54) **SYSTEMS AND METHODS FOR INTERFACES FOR VISUALIZING AND INTERACTING WITH A SEMANTIC MODEL**

(30) Priority: 17.03.2025 US 202563772882 P
(71) Applicant: Zigguratum, Inc., Dover DE Delaware 19904 (US)
(72) Inventor: STEWART, Daniel Steven, Coaltown of Balgonie, Fife, Scotland, KY7 6HN (GB); WEBSTER, George Davis, III, Sevenoaks, England, TN13 1RR (GB); VON PENTZ, Aurelia Zoe Eva, London, England, SE10 8FN (GB)
(74) Representative: Sieckmann, Dirk Christoph

(57) **Abstract**

Systems and methods are described for generating and rendering a semantic data graph that organizes heterogeneous data sources into a unified visualization structured as an ordered sequence of abstraction layers, each corresponding to a distinct level of abstraction from raw data provided by devices through to consuming applications. One or more users provide data defining data sources and mappings between data sources specifying how data at each level of abstraction corresponds to data at the next. Based on the received data, a semantic data graph is generated comprising nodes representing data sources at respective levels of abstraction and directed edges representing stored mappings between nodes, organized into an ordered sequence of layers.

## Description

### RELATED APPLICATIONS

The present application claims the benefit of priority of United States Provisional Patent Application No. 63/772,882 filed March 17, 2025, entitled "SYSTEMS AND METHODS FOR INTERFACES FOR VISUALIZING AND INTERACTING WITH A SEMANTIC MODEL," which is hereby fully incorporated by reference herein.

### TECHNICAL FIELD

The present disclosure relates to systems and methods for visualizing and interacting with semantic data graphs, and more particularly to user interfaces for rendering, navigating, and authoring multi-layer semantic data graph structures that organize heterogeneous data sources into progressively abstract semantic representations for consumption by downstream applications.

### BACKGROUND

Organizations managing large data estates face significant challenges in understanding, maintaining, and deriving value from the relationships between their raw data sources and the downstream applications and use cases that consume that data. Prior approaches to data visualization and management have addressed these challenges in fragmented and incomplete ways.

Early data lineage tools provided visualization of data flows within individual pipelines or between specific pairs of data sources, but did not provide a unified view connecting raw device-level data sources through intermediate abstraction layers to consuming applications. As a result, understanding the full provenance of a given data asset required manual traversal across multiple tools and systems, each providing only a partial view of the data estate.

Graph-based data catalog and lineage systems provided broader visualization of relationships across data assets, but presented these relationships without structural scaffolding organizing nodes into meaningful levels of abstraction. At enterprise scale, where a data estate may comprise thousands of individual datasets and hundreds of thousands of fields, presenting the full graph without such organization imposed significant cognitive and computational overhead, making it impractical for users to navigate and understand the graph as a whole.

Data transformation and ETL systems provided mechanisms for defining how raw data from specific device configurations is mapped and transformed into target schemas, but encoded these mappings in pipeline-specific configuration files or transformation code that was maintained separately from any visualization of the data estate. Understanding which transformations applied to a given data source required inspecting pipeline code or external documentation that was frequently out of date, and changes to upstream data sources required identifying and updating all downstream pipeline configurations affected by those changes.

Security detection and monitoring systems defined rules and use cases against specific data source schemas or vendor-specific field names, meaning that onboarding a new device vendor or replacing an existing one required identifying and updating every rule or use case referencing the affected data sources. This created substantial maintenance overhead and introduced the risk of detection gaps during the period between a vendor change and the completion of rule updates.

Investigation and analysis workflows requiring data from multiple heterogeneous sources required analysts to manually identify the relevant raw data sources, extract and reconcile data from those sources into a common format, and construct join logic to correlate records across sources before analysis could begin. This preparation overhead was substantial and introduced the risk of errors from manual data reconciliation, particularly in time-sensitive scenarios such as active security incident response.

Prior visualization systems also typically fragmented the user experience by role, providing data engineers with pipeline views, compliance teams with audit exports, and security teams with alert dashboards, with no shared visual representation of the underlying data estate connecting these perspectives. The absence of a unified view meant that different teams operated with divergent mental models of how data flowed through the organization, creating organizational silos and making cross-functional collaboration on data estate management difficult.

There is therefore a need for improved systems and methods that provide a unified interface for visualizing, navigating, and managing complex relationships across large heterogeneous data estates in a manner that is accessible to users across technical roles, that scales to enterprise data volumes without prohibitive computational or cognitive overhead, and that enables changes to the underlying data estate to be reflected consistently and automatically across all dependent data representations, rules, and visualizations.

### SUMMARY

The systems and methods described herein provide a unified developer interface for rendering, navigating, and authoring a semantic data graph that organizes heterogeneous data sources into an ordered sequence of abstraction layers, each corresponding to a distinct level of abstraction from raw data provided by devices through to consuming applications. By organizing data sources into a layered semantic structure and rendering that structure as a graph visualization within a single interface accessible to users across roles, the systems and methods described herein address the fragmentation and overhead of prior approaches.

In one aspect, embodiments include systems and methods for building and rendering a semantic data graph based on user defined data sources and mappings. The systems and methods include receiving, as input from one or more users via a developer interface, data defining a plurality of data sources and a plurality of mappings between data sources. Each mapping specifies how data from a source at a first level of abstraction corresponds to data at a second level of abstraction.

The systems and methods include generating, based on the received data, a semantic data graph. The semantic data graph includes a plurality of nodes and a plurality of directed edges. Each of the plurality of nodes represents a respective data source at a respective level of abstraction. Each of the plurality of directed edges represents a respective stored mapping between a source node and a destination node. The plurality of nodes is organized into an ordered sequence of layers, with each layer corresponding to a distinct level of abstraction from raw data provided by devices.

In some embodiments, systems and methods may visually represent different layers of the graph differently according to their abstraction level. For example, the ordered sequence of layers may comprise a first layer, one or more intermediate layers, and a final layer. In such embodiments: (a) each node of the first layer may be displayed in the graph visualization as a semantic representation of data ingested from a specific device configuration, (b) each node of the one or more intermediate layers may be displayed as a progressively more abstract semantic grouping of the data represented in the first layer, and (c) each node of the final layer may be displayed as an application consuming data from the one or more intermediate layers.

The systems and methods include determining, based on the layer organization of the semantic data graph, a default rendering scope that comprises a data source level representation of each node of the plurality of nodes. In some embodiments, the default rendering scope collapses each node across all layers of the ordered sequence to a single collapsed element, regardless of the number of datasets or fields defined for that node in the semantic data graph.

The systems and methods include causing a display device to render, within the developer interface, a graph visualization of the semantic data graph based on the default rendering scope. Each node of the plurality of nodes is displayed as a collapsed element in the graph visualization.

The systems and methods include, in response to a user interaction requesting detail for a first node of the plurality of nodes, retrieving, from the semantic data graph, stored detail associated with the first node that was generated based on the data received from the one or more users. In some embodiments, the stored detail associated with a node may be organized into a hierarchy comprising a dataset level and a field level. The systems and methods further include rendering the retrieved detail for the first node within the graph visualization.

In some embodiments, the systems and methods may include, in response to a first user interaction requesting detail for a first node of the plurality of nodes: (a) retrieving, from the semantic data graph, one or more datasets generated for the first node based on the data received from the one or more users; and (b) causing the display device to display, in the developer interface, the one or more datasets as sub-nodes within the first node in the graph visualization, where edges between dataset sub-nodes are displayed based on stored mappings between datasets defined by the one or more users. In such embodiments, the systems and methods may include, in response to a second user interaction requesting detail for a first dataset sub-node of the one or more dataset sub-nodes, retrieving, from the semantic data graph, one or more fields defined for the first dataset sub-node based on the data received from the one or more users. Moreover, in such embodiments, the systems and methods may include causing the display device to display, in the developer interface, the one or more fields within the first dataset sub-node in the graph visualization. Edges between fields may be rendered based on stored extraction function associations retrieved from the semantic data graph. Each extraction function association may specify how a source field is transformed into a corresponding destination field as defined by the one or more users.

In some embodiments, the systems and methods include, in response to a user selection of a selected node of the plurality of nodes, traversing the stored mappings of the semantic data graph from the selected node in both an upstream direction toward layers of lower abstraction and a downstream direction toward layers of higher abstraction. This traversal may identify a set of participating nodes and edges forming an end-to-end data flow connected to the selected node. In such embodiments, the systems and methods include causing the display device to display the graph visualization with a visual distinction applied to the identified set of participating nodes and edges based on results of the traversal. In such embodiments, the systems and methods may include, in response to a subsequent user interaction requesting detail for a first participating node of the identified set of participating nodes, retrieving stored detail for the first participating node from the semantic data graph. The systems and methods of such embodiments may further include causing the display device to display the retrieved stored detail with the visual distinction preserved for the first participating node and any other participating nodes and edges of the identified set rendered at the requested level of detail.

In some embodiments, the systems and methods include receiving, from the one or more users via a rules interface, a criteria definition comprising one or more conditions to be evaluated against data and a scope specification identifying one or more data sources against whose associated datasets the one or more conditions are to be evaluated. In such embodiments, the systems and methods may include receiving, from the one or more users via the developer interface, a definition of a new data source and one or more mappings connecting the new data source to one or more existing nodes of the semantic data graph. Moreover, in such embodiments, the systems and methods may include storing the new data source and mappings in the semantic data graph such that data ingested from the new data source is transformed into one or more semantic representations corresponding to the one or more existing nodes. In such embodiments, the systems and methods may further include causing the display device to update the display of the rules interface to reflect the new data source as a contributing data source for each criteria definition associated with a given dataset to which the new data source contributes through the stored mappings. In some such embodiments, the systems and methods include causing the display device to update the graph visualization to display the new data source as a new node connected to the one or more existing nodes by one or more new edges.

In some embodiments, the systems and methods include maintaining, in the semantic data graph, a plurality of stored mappings transforming raw data from a plurality of heterogeneous data sources, each having a different data format, into shared semantic representations at each layer of the ordered sequence of layers. Data from each of the plurality of heterogeneous data sources may be expressed in a common field representation at each layer regardless of the originating data format. In such embodiments, the systems and methods include receiving, from the one or more users via the developer interface, a definition of a new data source and a mapping specifying how raw data from the new data source is transformed into the semantic representation of one or more nodes at a first layer of the ordered sequence of layers. In such embodiments, the systems and methods may further include storing the new data source and the mapping in the semantic data graph.

In some embodiments, the systems and methods include determining, based on the stored mappings of the semantic data graph, one or more additional mappings transforming the semantic representation of the raw data of the new data source at the first layer into the shared semantic representations of one or more nodes at each successive layer of the ordered sequence of layers. In such embodiments, the systems and methods may include storing the one or more additional mappings in the semantic data graph such that data from the new data source is automatically expressed in the shared semantic representations at each layer of the ordered sequence of layers upon ingestion, without requiring the user to define mappings for each successive layer individually.

The systems and methods described herein may be implemented as a computer-implemented method, a system including a processor and a non-transitory computer readable medium that includes instructions for performing operations described herein, or a non-transitory computer readable medium including instructions for performing operations described herein.

These, and other, aspects of the invention will be better appreciated and understood when considered in conjunction with the following description and the accompanying drawings. The following description, while indicating various embodiments of the invention and numerous specific details thereof, is given by way of illustration and not of limitation. Many substitutions, modifications, additions or rearrangements may be made within the scope of the invention, and the invention includes all such substitutions, modifications, additions or rearrangements.

### BRIEF DESCRIPTION OF THE DRAWINGS

The drawings accompanying and forming part of this specification are included to depict certain aspects of the invention. A clearer impression of the invention, and of the components and operation of systems provided with the invention, will become more readily apparent by referring to the exemplary, and therefore non-limiting, embodiments illustrated in the drawings, wherein identical reference numerals designate the same components. Note that the features illustrated in the drawings are not necessarily drawn to scale.
FIGURE 1 depicts one embodiment of a network topology including an embodiment of a data management system 50 that may provide the various user interface functionalities described herein.
FIGURE 2 depicts an example of a semantic model such as the one described with respect to FIGURE 1.
FIGURE 3 illustrates a navigation interface for accessing the primary views of the semantic data graph (SDG) visualization system.
FIGURES 4A and 4B illustrate the Semantic Center in its default zoomed-out state, which represents the highest level of abstraction at which the SDG is presented to users.
FIGURES 5A and 5B illustrate the Semantic Center view following a user interaction in which a user selects a node within one of the SDG layers.
FIGURES 6A and 6B illustrate the Semantic Center following a zoom-in interaction applied to the zoomed-out view of FIGURES 4A and 4B, representing the intermediate level of the progressive disclosure hierarchy.
FIGURE 7 illustrates the Semantic Center following a further zoom-in interaction applied to the dataset-level view of FIGURES 6A and 6B, representing the most granular level of the progressive disclosure hierarchy.
FIGURE 8 illustrates a query interface that is surfaced as a pop-up window when a user selects a query element on a dataset node within the dataset-level view of FIGURES 6A and 6B.
FIGURE 9 illustrates an information panel view that is surfaced as an overlay on top of the graph when a user selects an information element on a dataset node within the dataset-level view of FIGURES 6A and 6B.
FIGURE 10 illustrates the Semantic Editor in its unfiltered data source view, which presents the complete universe of data sources available within the system, including both data sources that have been associated with the SDG and those that have not yet been incorporated into any lineage path.
FIGURE 11 illustrates the import data source menu that is surfaced when a user selects to import data sources within the Semantic Editor.
FIGURE 12 illustrates the Semantic Editor canvas following the import of a data source, depicting the state of the canvas after a user has selected and confirmed the import of the Network Firewall data source from the menu of FIGURE 11.
FIGURE 13 illustrates the interface to add a dataset to a node that is surfaced when a user selects to add a dataset to a node that is displayed in the Semantic Editor as in FIGURE 12.
FIGURE 14 illustrates the canvas state of the Semantic Editor following the save of a newly added dataset, showing the parent data source node updated to include the new dataset as an additional sub-node alongside the datasets that were present at import time.
FIGURE 15 illustrates the canvas state of the Semantic Editor following the selection of the expand left control from the contextual toolbar of FIGURE 12 on the Network Firewall node (Layer 2, Semantic Layer).
FIGURE 16 illustrates the edit dataset mapping form that is surfaced when a user selects an edge between two dataset nodes on the Semantic Editor canvas, for example following the expand left operation described with respect to FIGURE 15.
FIGURE 17 illustrates the create new workspace dialog that is surfaced when a user initiates the creation of a new investigation environment from the Explore tab of the system.
FIGURE 18 illustrates the add dataset instance sub-menu that is surfaced when a user selects the plus sign control adjacent to the Dataset Instances section of the workspace creation dialog of FIGURE 17.
FIGURE 19 illustrates the Explore tab of the system populated with saved investigation workspaces, representing the view that users encounter after one or more workspaces have been created through the workflow described with respect to FIGURES 17 and 18.
FIGURE 20 illustrates the rules tab of the system, which provides the interface through which security detection rules are defined, managed, and monitored.
FIGURE 21 illustrates the detections tab of the system, which presents alert events that have been generated by the security detection rules defined in the rules tab of FIGURE 20.
FIGURE 22 illustrates the rules monitoring dashboard of the system, which provides a visualization of alert volume over a specified duration.
FIGURE 23 illustrates the storage tab of the system, which provides a time-series view of data volume processed through the SDG's semantic layer data sources on a particular time-based (e.g., hourly) basis.
FIGURES 24A and 24B illustrate a blast radius visualization indicating a map of security detections against data sources generated by the system based on criteria specified by the user while setting up an investigation environment or one or more monitoring/alert rules.

### DETAILED DESCRIPTION

Systems and methods, and the various features and advantageous details thereof, are explained more fully with reference to the non-limiting embodiments that are illustrated in the accompanying drawings and detailed in the following description. Descriptions of well-known starting materials, processing techniques, components and equipment are omitted so as not to unnecessarily obscure the embodiments in detail. It should be understood, however, that the detailed description and the specific examples, while indicating some embodiments, are given by way of illustration only and not by way of limitation. Various substitutions, modifications, additions and/or rearrangements within the spirit and/or scope of the underlying inventive concept will become apparent to those skilled in the art from this disclosure.

Systems and methods are described for generating and rendering a semantic data graph that organizes heterogeneous data sources into a unified visualization structured as an ordered sequence of abstraction layers, each corresponding to a distinct level of abstraction from raw data provided by devices through to consuming applications. One or more users provide data defining data sources and mappings between data sources specifying how data at each level of abstraction corresponds to data at the next. Based on the received data, a semantic data graph is generated comprising nodes representing data sources at respective levels of abstraction and directed edges representing stored mappings between nodes, organized into an ordered sequence of layers.

Before discussing embodiments in more detail, some additional context may be useful. Data management platforms are systems designed to ingest, store, organize, and make accessible large volumes of data originating from many different sources within an enterprise computing environment. As enterprises grow, so too does the number of devices, applications, services, and infrastructure components that generate data, and the volume of data produced by each of those sources grows commensurately. Each of these data sources may produce data in its own format and according to its own schema, creating a landscape of heterogeneous data that must nonetheless be made useful in a coherent and unified way. Traditionally, data management platforms have addressed this challenge either by processing and indexing all incoming data regardless of whether it will ever be used (an approach that is resource-intensive and increasingly unsustainable as data volumes grow) or by requiring data engineers to manually construct rigid, predetermined structures into which incoming data is forced (an approach that is time-consuming, brittle, and poorly suited to the dynamic nature of real enterprise environments). What is needed, and what the platform described herein provides, is a system that stores incoming data in its raw form, imposes semantic meaning on that data through a structured model, and processes only the data that is actually needed, when it is actually needed, based on how users and applications interact with the platform.

The data management platform of the embodiments described herein addresses these challenges through a combination of a semantic layer, configurable ingest pipelines, a raw data lake, a real-time analytics system, and an advanced alert and investigation generation system. Each of these components plays a distinct role, and together they allow the platform to ingest data from a large number of heterogeneous data sources, make that data semantically meaningful, and surface it to users efficiently and on demand. The following description of these components and their interactions is provided to give context for the user interface embodiments described in detail hereinafter.

At the foundation of the platform is a semantic model, which serves as the organizational backbone of the entire system. The semantic model is a directed graph comprising nodes organized into a hierarchy of tiers ordered from most specific to most abstract. The least abstract tier contains nodes representing specific data source configurations, such as a particular device model and software version, a specific application, or a particular type of log or service. Intermediate tiers group those specific sources by broader criteria, such as vendor, hardware category, or software type. The most abstract tier contains high-level normalized concepts representing categories of data or behavior without reference to any particular source, such as "Network Activity" or "Network Firewalls." Directed edges connect nodes in more specific tiers to nodes in more abstract tiers, representing the mapping relationships between them. Because data sources are associated with nodes in the least abstract tier, and because those nodes are connected upward through edges to progressively more abstract concepts, the semantic model can be traversed in reverse (e.g., starting from any abstract concept and following edges downward) to identify every data source whose data relates to that concept. This traversal mechanism allows the platform to resolve high-level user-defined criteria to specific underlying data sources.

The semantic model is built and maintained by users of the platform through the platform's user interface. Users add nodes to the model, assign data sources to nodes in the least abstract tier, and define the mapping relationships between nodes across tiers, constructing the graph that represents the semantic organization of their enterprise's data landscape. As the enterprise's infrastructure changes (e.g., new devices are added, software is upgraded, or data sources are removed), users update the semantic model accordingly, and the platform's behavior adapts automatically because all downstream functionality resolves data sources and fields dynamically through the model rather than relying on static, hard-coded configurations.

When a new data source is added to the platform, a user configures it through the platform's user interface by providing data source definition data. This includes a specification of the source itself, including its type, vendor, software, version, other identifying characteristics, and a contextual description explaining what the source is, what kind of data it produces, and how that data is intended to be used. The user may also provide sample data to test the model: one or more representative examples of data in the same format and schema as data that will actually arrive from the source during operation.

Using this information, the user defines an ingest pipeline for the data source. The ingest pipeline consists of two components. The first is an internal schema: a structured definition of the fields to be extracted from data received from this source, specifying for each field a name, a data type, and any relevant format or size constraints. The second is a set of extraction functions, one corresponding to each field in the internal schema, each specifying how to locate and retrieve the value for that field from raw incoming data. An extraction function may specify a parsing rule, such as a field name lookup in a JSON structure, a column reference in tabular data, or a positional index into delimited values, and may also specify a transformation to be applied to the extracted value before storage, such as a type cast or format conversion. Taken together, the internal schema and extraction functions define a complete, executable procedure for transforming raw data from the source into a structured record conforming to the internal schema. The ingest pipeline is stored in association with the data source and is invoked whenever data from that source needs to be processed into structured form.

Each field in the internal schema is also mapped by the user to one or more nodes in the semantic model, including nodes in the most abstract tier. This field-level mapping is what gives the platform's data its semantic meaning: when a field from one data source and a field from a completely different data source are both mapped to the same abstract semantic concept, the platform understands them to be semantically equivalent, and can treat them as the same kind of data regardless of the different field names, formats, or schemas used by their respective sources. This semantic equivalence is the mechanism that allows users to define investigations and rules at a high level of abstraction (e.g., referencing semantic concepts rather than source-specific field names) and have the platform automatically resolve those definitions to the correct fields across all relevant data sources.

As data arrives from configured data sources during platform operation, it is received by a data ingest module. The data ingest module stores all incoming raw data in a raw data lake without applying any ingest pipeline processing. Data is stored in its original format, compressed, and tagged with the identifier of the source from which it originated and a timestamp indicating when it was generated or received. The raw data lake is designed for durability and low cost rather than fast structured querying. The role of the raw data lake is to preserve a complete record of all data received from all sources so that it can be retrieved and processed later when a user defines an investigation or an alert rule. In addition to storing data in the raw data lake, the data ingest module provides a subscription service through which other components of the platform can subscribe to the live data feeds of specific data sources. When data arrives from a subscribed source, the data ingest module delivers it to all current subscribers as well as storing it in the raw data lake.

The real-time analytics system operates on data as it arrives at the platform. It is driven by two types of user-defined configurations: rules and investigations. A rule is a standing definition created by a user that specifies a set of data of interest (e.g., defined using semantic concepts from the semantic model), along with a set of evaluation conditions to be tested against that data and an action to be taken when those conditions are met. Evaluation conditions may include thresholds, counts of specific event types within a defined time window, or other criteria expressible against the extracted field values. The action associated with a rule is typically the generation of an alert, the automatic creation of an investigation, or both. When a rule is created, a use case mapper within the real-time analytics system resolves the rule's semantic criteria to a specific set of data sources and specific fields within those sources' internal schemas by traversing the semantic model. The real-time analytics system then subscribes to the live data feeds of those resolved data sources through the data ingest module's subscription service.

As raw data arrives from a subscribed data source, a sparse field extractor within the real-time analytics system processes it. For each rule associated with that data source, the sparse field extractor identifies the specific subset of internal schema fields relevant to that rule, executes only the corresponding extraction functions from the ingest pipeline for that source, and stores the extracted field values in a real-time analytics data store associated with the rule and data source. Only the fields actually needed by configured rules are extracted and stored and all other fields in the incoming data are not extracted at this time. This sparse extraction approach ensures that the real-time analytics system consumes only the processing and storage resources actually required by the rules currently configured on the platform.

An execution engine continuously evaluates the data accumulating in the real-time analytics data store against the conditions defined in each rule. To support time-windowed evaluations (e.g., determining whether a particular event type has occurred more than a threshold number of times within the past hour), the execution engine maintains a sparse data cache that comprises a fast-access rolling store of recently extracted sparse field data covering a configurable recent time period. Evaluations run against this cache or the analytics data store depending on the time horizon of the condition being evaluated. When the conditions of a rule's evaluation are met, the execution engine executes the configured action. If the action is to generate an alert, the execution engine creates an alert record associated with the triggering rule, the timestamp at which conditions were met, and the specific data values that triggered the evaluation. If the action is to create an investigation, the execution engine automatically instantiates an investigation scoped to the data sources and time period implicated by the triggering event. Alerts are delivered to subscribed components of the platform through a subscriber-based notification system, allowing the user interface to surface them to users in real time.

Investigations are the primary mechanism through which users access and query historical data held in the raw data lake. An investigation is defined by two parameters: a set of criteria specifying which data is of interest, and a time period specifying the range of data to include. Criteria may reference specific data sources by identifier, semantic concepts from the semantic model at any level of abstraction, or a combination of both. When a semantic concept is specified in an investigation's criteria, the system traverses the semantic model downward from that concept to identify all currently configured data sources that map to it, regardless of how many such sources exist or what types they are. This means a user can define an investigation at a high level of abstraction (e.g., referencing a concept like "Network Activity") and the platform will automatically include all relevant data sources across the enterprise without the user needing to enumerate them individually. Investigations may be created manually by a user through the platform's interface, or automatically by the execution engine in response to a rule's action.

Once an investigation is created and its criteria resolved to a set of data sources, the system indexes data for that investigation through the following process. The indexer first checks whether any of the required data (e.g., for the resolved data sources and time period) is already present in a refined data lake from a previously created investigation or from the real-time analytics data store. If such data exists, it is associated with the new investigation by reference, without reprocessing or copying. For any data not already available in structured form, the indexer retrieves the corresponding raw data from the raw data lake and processes it through the ingest pipeline for each respective data source, producing structured records conforming to each source's internal schema. The resulting structured, semantically annotated data is stored in the refined data lake in association with the investigation.

To make data available for querying as quickly as possible rather than waiting for the entire time period's worth of data to be processed, the indexer employs just-in-time chunked indexing. The full set of raw data to be processed is divided into time-based chunks, and chunks are processed in reverse chronological order so that the most recent data becomes available in the refined data lake first. As each chunk is processed and stored, it immediately becomes available for querying. This means an investigation transitions progressively from a state in which no data is yet indexed, through intermediate states in which recent data is available while older data continues to be processed in the background, to a fully indexed state in which all data for the defined scope is present in the refined data lake. Once data is available in the refined data lake, the user can open the investigation in Databricks for querying and analysis. Because all fields in the refined data lake are mapped to semantic model concepts, data from multiple heterogeneous sources can be queried together using shared semantic vocabulary, and virtual views can be constructed that present data from across sources in a unified structure.

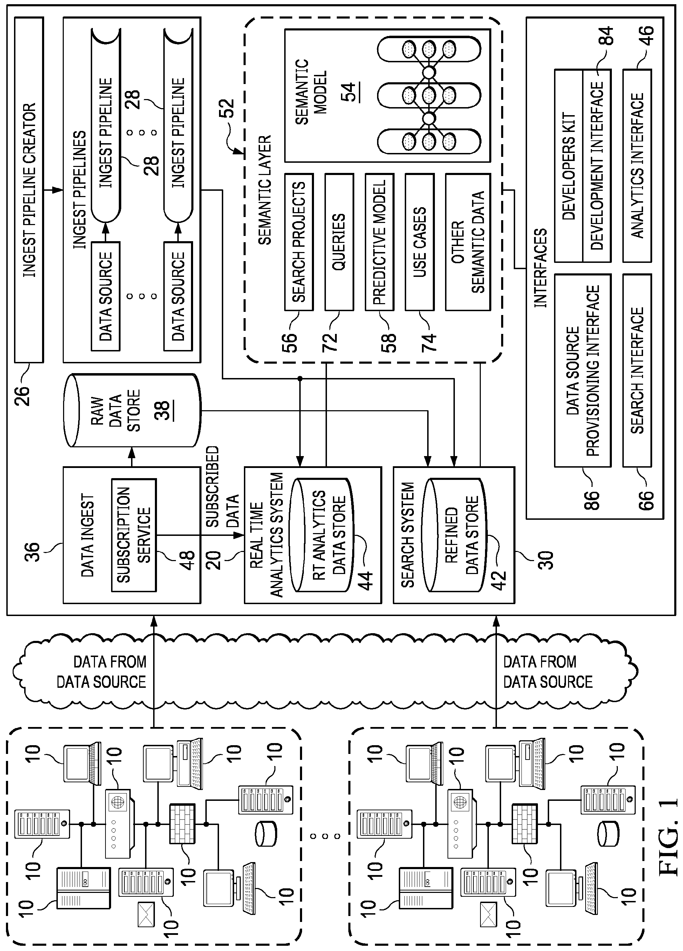

Looking first at FIGURE 1 then, one embodiment of a network topology including an embodiment of a data management system 50 that may provide the various user interface functionalities described herein is depicted. Data management system 50 may be adapted to manage data associated with one or more enterprises (e.g., any for profit or non-profit entity that employs computing resources or infrastructure). An enterprise may comprise a set of heterogeneous data sources 10 that may be distributed across the enterprise (e.g., at various sites, domains or locations associated with the enterprise). These data sources 10 may comprise any source of data that can be identified with a point of origin such as network infrastructure devices, network management systems, software services, applications, logs, etc.

To manage data originating from these data sources, data management system 50 may employ semantic layer 52. Semantic layer 52 may include a semantic model 54, search projects 56 defined by a user (e.g., using search interface 66), queries submitted by a user or application 72, use cases 74 (e.g., defined by a user through a development interface 84 using a developers kit or the like), a predictive model 58 such as a (semantic) LLM or other semantic data. Data management system 50 may utilize semantic layer 52 to illuminate data from data sources 10 with a semantic context based on semantic model 54 and route this contextualized data to various systems or applications that make use of that data such as real time analytics system 20 or search system 30.

The semantic model 54 may thus include a set of concepts organized as a set of (ordered) tiers, each tier comprising a set of (semantic) concepts, where the concepts in one tier are mapped to the concepts in a subsequent tier. The tiers comprising the semantic model may be ordered based on the level of abstraction represented by each tier (e.g., from more specific to more general or abstract) such that the first tier of the semantic model may represent more specific concepts for data normalization while the last tier of the semantic model may comprise the most general or abstract concepts for semantic normalization of data. The concepts included in each tier of the semantic model may be mapped (e.g., associated with) one or more concepts in a subsequent (e.g., more abstract) tier in the semantic model. As may be imagined there may be almost any number of intervening tiers between a first tier and a (most abstract) semantic tier of a semantic model. Moreover, there may be additional layers of a semantic model, such as layers including representation of applications that may consume data or how data is to be presented.

In one embodiment, a semantic model may include a (e.g., least abstract) first tier comprising a raw data or data source tier including a number of concepts representing specific sources of data, (e.g., including the data schemas, fields, specific device configurations, models or versions of software, specific services or programs, etc. of those data sources), and a (more abstract) semantic tier comprising a number of concepts representing the normalization of the semantics of data, such as concepts representing a type of the data, or a type of data source from which data can originate.

When a data source 10 is provisioned at data management system (e.g., when the data management system 50 is configured to receive and manage data from this new data source 10) a user may provide data source definition data to the data management system 50 (e.g., through data source provisioning interface 86). The provisioned data source 10 can then be associated with a concept in semantic model 54 representing the specific type or configuration of that data source 10.

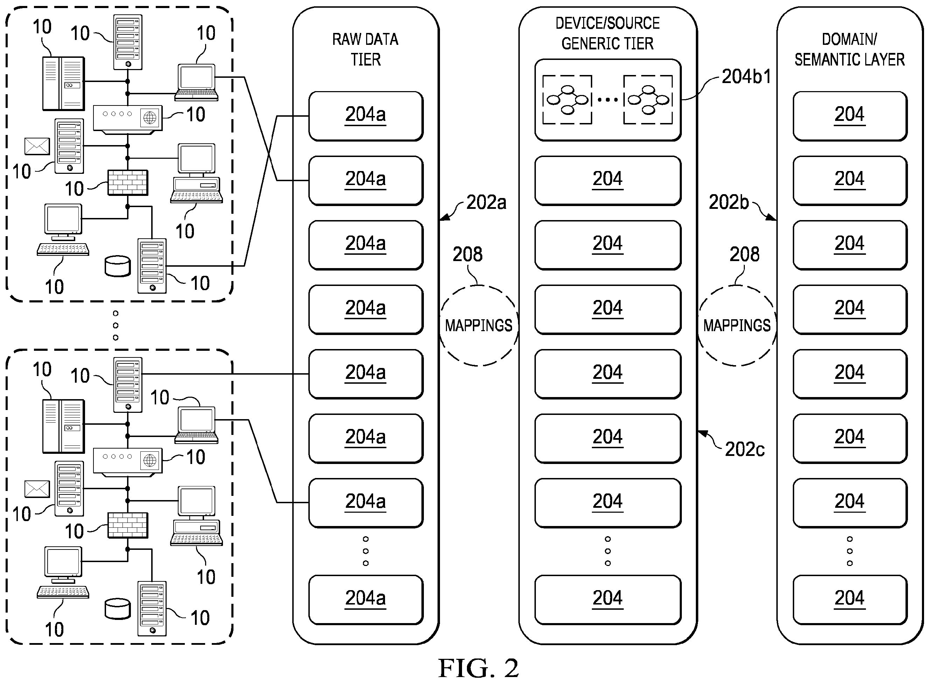

It may be useful here before proceeding further to discuss embodiments and examples of such semantic models in more detail. FIGURE 2 depicts an example of such a semantic model. In this example, semantic model 200 include a (e.g., least abstract) first tier 202a comprising a raw data or data source tier including a number of concepts 204a representing specific sources of data, (e.g., including the data schemas, fields, specific device configurations, models or versions of software, specific services or programs, etc. of those data sources), and a (more abstract) semantic tier 202b comprising a number of concepts representing the normalization of the semantics of data, such as concepts representing a type of the data, or a type of data source from which data can originate. Concepts 204a associated with specific data sources can thus be defined in a least abstract layer and individual data sources 10 configured for a data management system associated with those concepts 204a in the least abstract tier 202a. In some embodiments, there may be one or more middle tiers 202c of the semantic model that represent varying levels of abstraction, such as a (source generic) tier representing generic data sources and including concepts that group data sources by criteria associated with those data sources including, for example, vendor criteria, manufacturer criteria, hardware criteria, software criteria (e.g., software type or version), criteria associated with a type of data provide, interface criteria, or other criteria. Additionally, each concept 204 (e.g., concept 204b1) may encompass one or more other concepts (or sets of concepts) such that each concept 204 may form a subgraph of the semantic model 200.

Mappings 208 may associate concepts across tiers 202 illustrating how data sources and data items from those data sources may interrelate through data lineage and transformations. By mapping data sources 10 to concepts (nodes) 204a in the least abstract layer in the first tier 202a, such a semantic model 200 may be traversed (e.g., in a reverse direction) starting with concepts 204 in the most abstract tier 202b to determine all data sources 10 associated with any semantic concepts in that most abstract tier 202b.

Accordingly, the semantic model 200 utilized by embodiments may be thought of, or represented as, a graph, where each tier 202 of the semantic model 200 comprises a set of nodes representing the concepts 204 associated with that tier 202 and the mappings 206 between the concepts of each tier 202 are represented by edges of the graph. In particular, the semantic model 200 used by embodiments may be thought of as a directed graph, where the set of nodes representing the concepts 204 in a more specific tier 202 are joined by directed edges to the one or more nodes representing concepts 204 in a subsequent more abstract tier 202 to which those nodes are mapped (e.g., a directed edge is included in the graph from a node in a less abstract tier to corresponding node in the more abstract tier to which the node of the less abstract tier is mapped).

In some embodiments a first least abstract tier of the semantic model 200 may include a device tier representing raw data feeds from specific device models and versions (e.g., Fortigate 60F v1.2.3) and abstract data sources, such as SaaS services. A middle tier may include a device abstract layer grouping data sources, such as devices, into product types by vendor or other criteria (e.g., Fortigate Firewalls). A most abstract semantic tier may include any concepts that serve to normalize data by semantics rather than vendor or source (e.g., Network Activity, Network Firewalls). Each tier may thus comprise nodes that represent data sources, datasets within those sources and individual fields (items) within those datasets. Edges in the graph represent mappings between concepts (e.g., data items or fields) across layers, representing how data sources interrelate through data lineage and transformations.

Returning to FIGURE 1, data sources 10 are provisioned at data management system by providing data source definition data to the data management system 50 (e.g., through data source provisioning interface 86) and the provisioned data source 10 is associated with a concept in semantic model 54 representing the specific type or configuration of that data source 10. Additionally, ingest pipeline creator 26 may create an ingest pipeline 28 associated with that data source 10 being provisioned (e.g., an identifier for that data source 10). Specifically, ingest pipeline creator 26 may create an ingest pipeline 28 for the data source using semantic layer 52. The generated ingest pipeline 28 for the data source 18 comprises a (data management system internal) schema for storing or using data from that source 10 and one or more extraction functions adapted to extract data from data received from that data source and, if need, transform that data for storage according to the internal schema for storing or using that data. The internal data schema may comprise a set of data items mapped to concepts of the semantic model 54.

Thus, ingest pipelines 28 created for provisioned data sources 10 in an enterprise may be used to provide semantically contextualized data from those data sources 10 to components of the data management system 50 as that data is needed by those components. In one embodiment, these components may include a real time analytics system 20 and a search system 30. Specifically, real time analytics system 20 may allow use cases 74 defining data sets where these use cases for data may be specified based on the semantics of the data desired for use by an application (e.g., through development interface 84). The semantics may be specified according to concepts defined in semantic model 54. Similarly, search system 30 may allow search projects 56 to be defined (e.g., through search interface 66), where those search projects define data sets based on the semantics of the data desired to search. The semantics may be specified according to concepts defined in semantic model 54.

Based on the semantic concepts used to define the use cases 74 or search projects 56 a set of data sources 10 associated with the use case 74 or search project 56 may be determined. Those data sources 10 may, for example, comprise each or all of a set of heterogeneous data sources distributed across the enterprise that are all associated with the semantic concepts used to define the use case 74 or search project 56.

As data is received from these various data sources 10 configured at the data management system 50, this data may be received by data ingest module 36 and stored in the raw data lake 38 (e.g., in its original form). The data received may be stored in the raw data lake 38 in association with a time stamp (e.g., indicating when the data was generated, received, stored, etc.) such that data from individual data sources 10 may be obtained according to a time based query or the like. Based on the data sources associated with a search project 56, search system 30 may obtain data received from those data sources 10 from raw data lake 38 and process this data using ingest pipeline 28 corresponding to each data source 10 to process data from that corresponding data to index (e.g., semantically contextualize and store) the obtained data in refined data store 42. The data set comprising the indexed data in refined data store 42 corresponding to that search project 56 may be made available for querying (e.g., through search interface 66).

Real time analytics system 20 may operate by subscribing to data feeds associated with the data sources determined for a use case 74. Specifically, data ingest module 36 may provide a subscription service 48 whereby subscribers may subscribe to data feeds from data sources 10. Thus, as data is received from that data source 10 not only may data ingest module 36 store this data in raw data source 38 but, additionally, data ingest module 36 may provide this received raw data from the data source 10 to subscribers to the data feed for that data source. Thus, by subscribing to data feeds associated with data sources determined for a use case 74, real time analytics system 20 may receive the raw data received from that data source 10 (e.g., as it is received by the data management system.

Real time analytics system 20 may process this received raw data from data sources associated with a use case 74 using ingest pipeline 28 corresponding to each data source 10 to process data from that corresponding data to index (e.g., semantically contextualize and store) the received data in analytics data store 44. The data set comprising the indexed data in analytics data store 44 corresponding to that use case may be made available for use by application or other consumers (e.g., querying) through analytics interface 46.

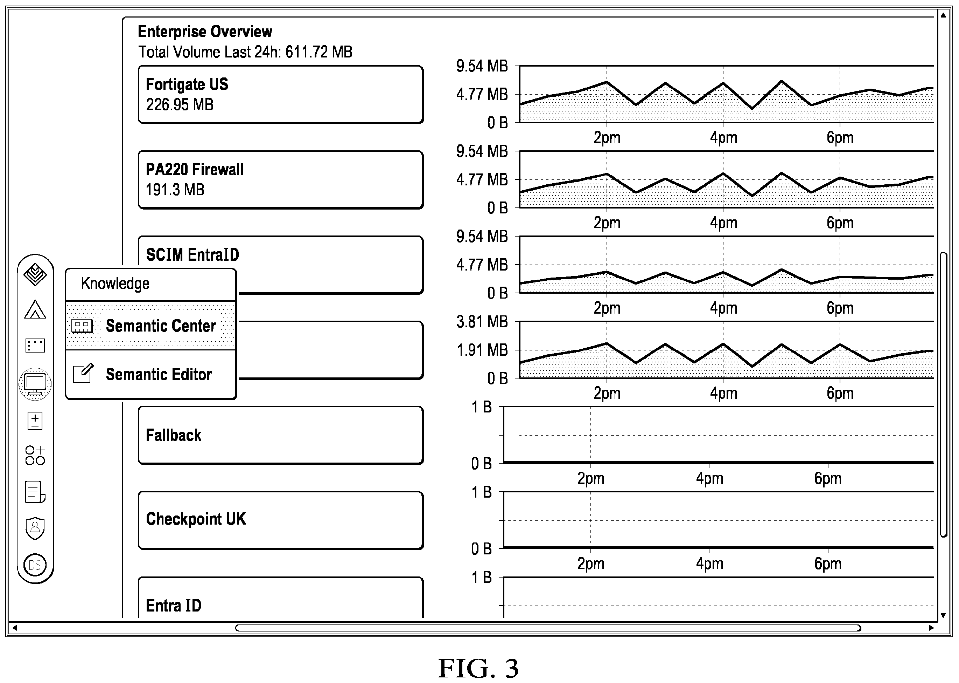

Turning now to FIGURE 3, FIGURE 3 illustrates a navigation interface for accessing the primary views of the semantic data graph (SDG) visualization system. The system provides two principal modes of interaction with the SDG: a Semantic Center and a Semantic Editor. These two modes share a unified visual model of the SDG but expose different capabilities depending on whether the user is consuming or authoring the model, as described in greater detail below with respect to subsequent figures.

A persistent navigation toolbar is displayed along a vertical axis of the interface and remains visible across all views and modes of the system. This persistent availability ensures that users can transition between the Semantic Center, the Semantic Editor, and any other system functions (e.g., security rules, detections monitoring, investigation environments, storage analytics) at any point without losing their current context or requiring navigation through intermediary screens. This is a significant improvement over prior systems in which distinct functional views (e.g., data lineage tools, schema designers, and security monitoring dashboards) were implemented as entirely separate applications or required users to leave and re-enter different platform areas, fragmenting the user experience and reinforcing organizational silos.

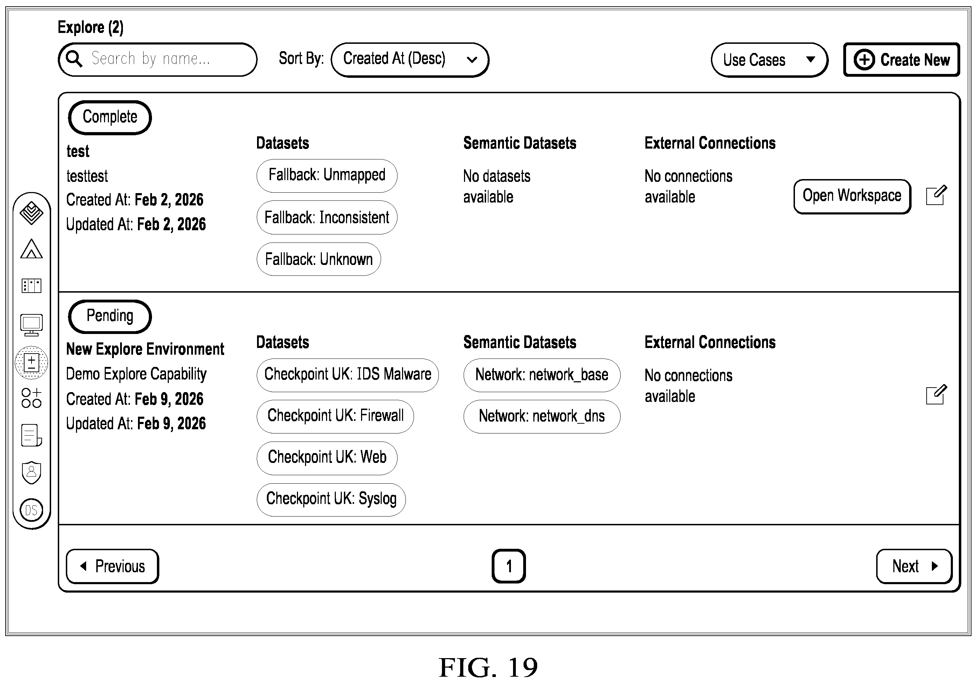

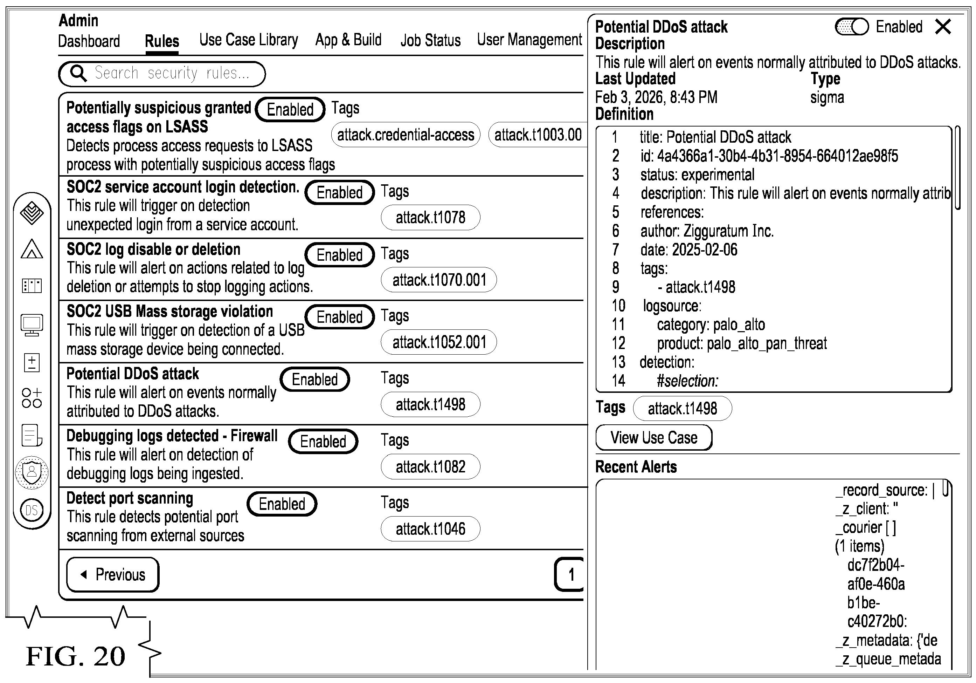

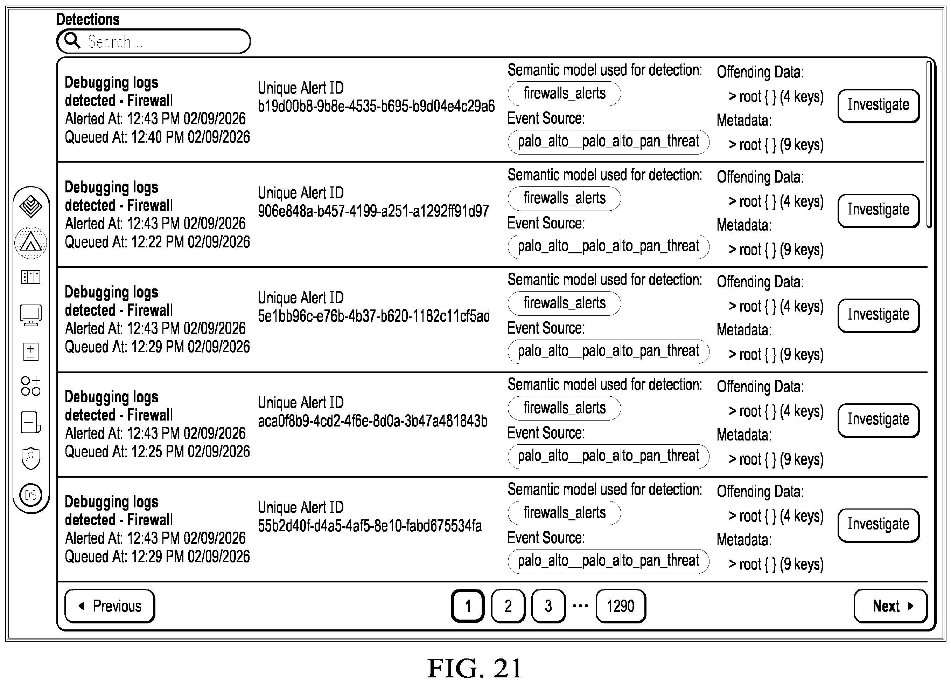

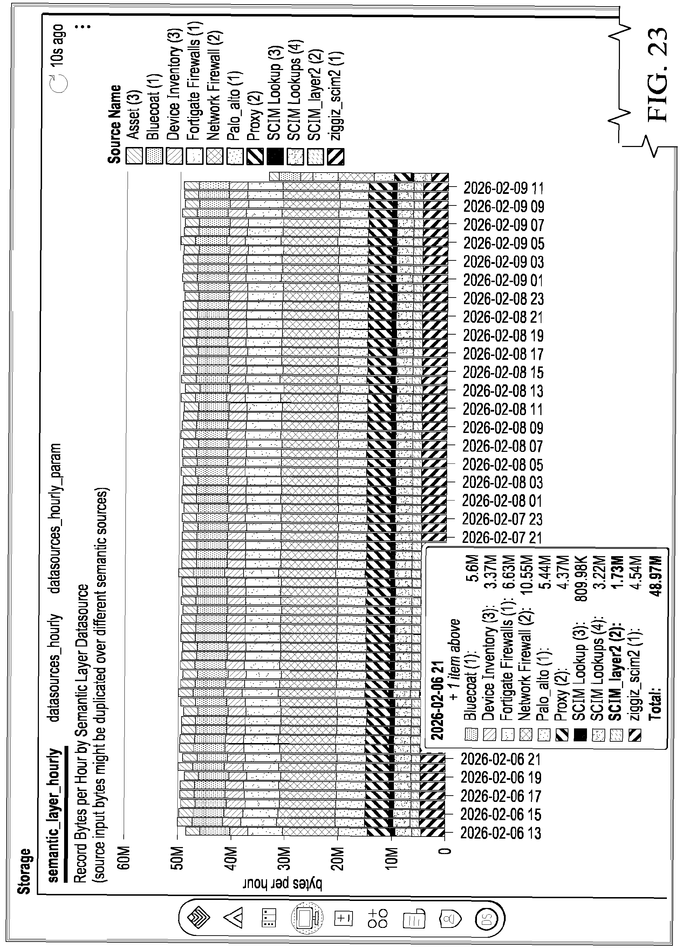

The toolbar includes a display icon which, when a cursor hovers over or selects it, surfaces a contextual menu presenting the options of Semantic Center and Semantic Editor. This hover-triggered disclosure pattern reduces visual clutter in the persistent toolbar while keeping primary navigation actions readily accessible. The toolbar is designed to accommodate additional function icons corresponding to other system capabilities (e.g., the rules interface of FIGURE 20, the detections interface of FIGURE 21, the explore interface of FIGURE 19, and the storage interface of FIGURE 23), each reachable from any state of the application via the same toolbar interaction pattern.

The distinction between Semantic Center and Semantic Editor as separately accessible modes reflects a deliberate design decision to modulate exposed complexity based on user intent. Users who are consuming, analyzing, or navigating the SDG access the Semantic Center, which presents the model in a read-oriented visualization optimized for lineage exploration, coverage assessment, and cross-role understanding of the data estate. Users who are constructing or modifying the SDG access the Semantic Editor, which presents an authoring canvas with tools for importing data sources, creating datasets, defining field-level mappings, and expanding the model with new nodes and connections. This separation ensures that the authoring interface's complexity (e.g., mapping editors, schema definition forms, transformation expression fields) is not surfaced to users who have no need for it, while still being accessible through a single toolbar interaction for those who do. The Semantic Center and Semantic Editor views, and the distinction between them, are described in greater detail below.

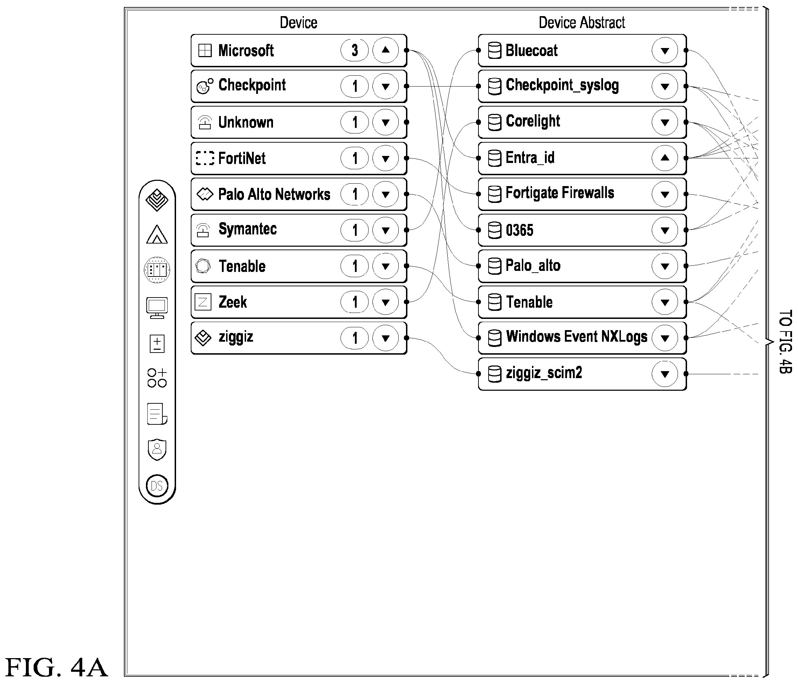

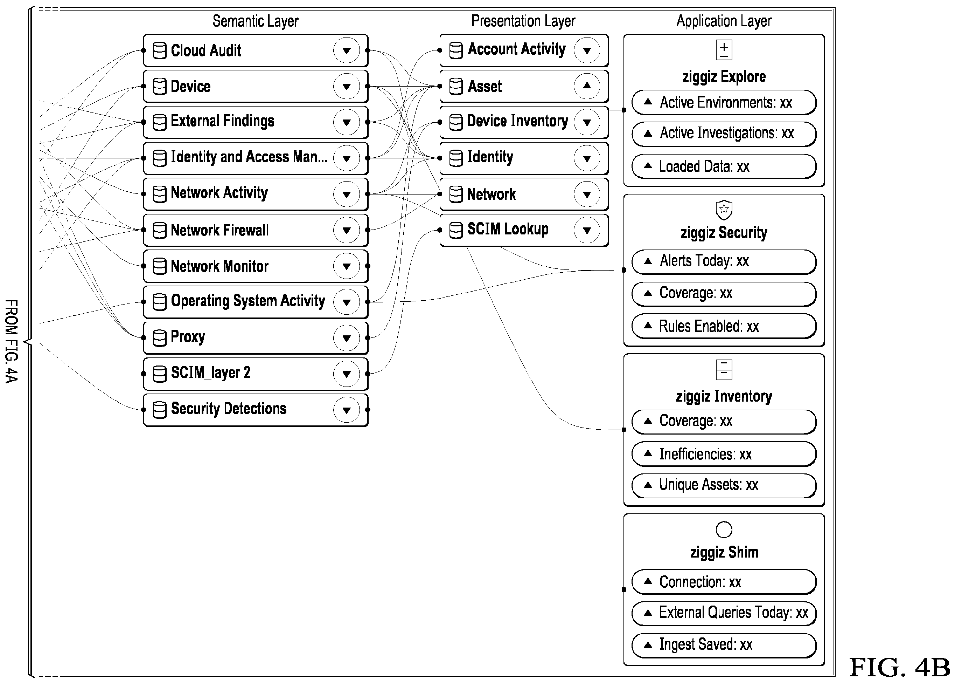

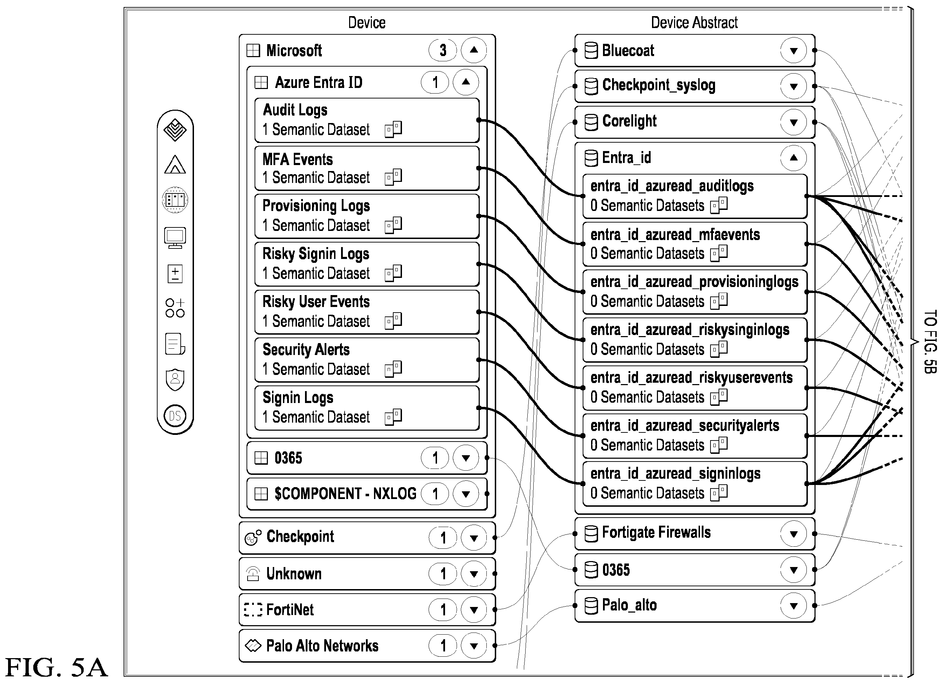

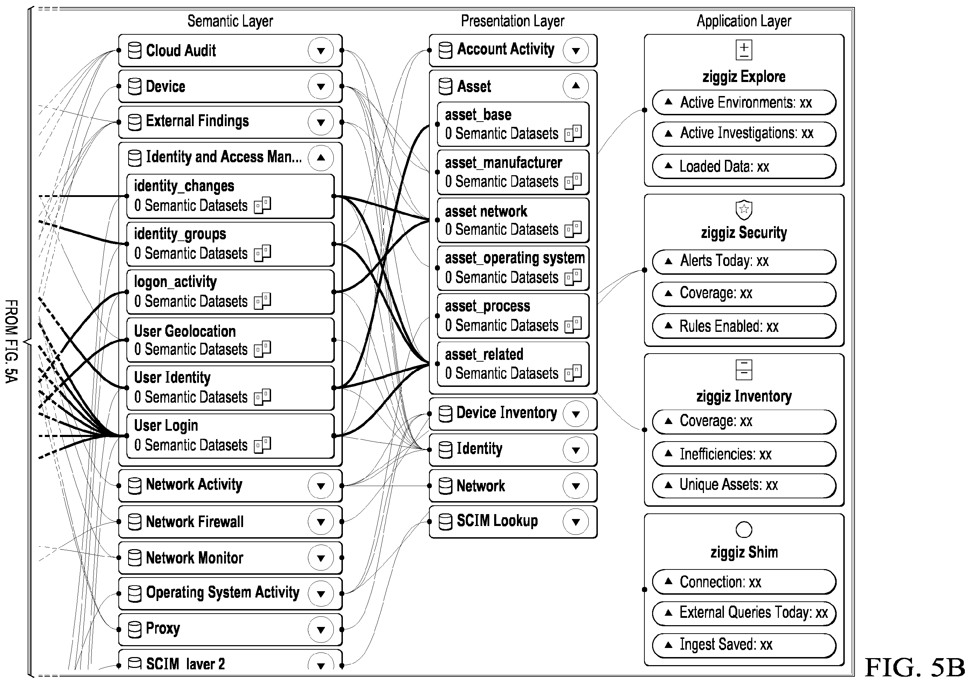

FIGURES 4A and 4B illustrate the Semantic Center in its default zoomed-out state, which represents the highest level of abstraction at which the SDG is presented to users. FIGURE 4A shows what may be displayed on the left portion of the user interface with FIGURE 4B showing what may be displayed to the right of FIGURE 4A, for example. At this zoom level, all nodes are collapsed to the data source level, meaning individual datasets and fields within each data source are not yet visible. This progressive disclosure approach addresses a fundamental challenge in SDG visualization at enterprise scale: large organizations may manage thousands of individual datasets and hundreds of thousands of fields across their data estate, such that rendering all of this information simultaneously would impose significant performance costs on the system. By collapsing nodes to the data source level as the default view, the system ensures that users are first oriented to the display and connectivity of their data estate before being exposed to finer-grained detail, which is revealed through subsequent zoom or selection interactions described below and with respect to FIGURES 5 through 10.

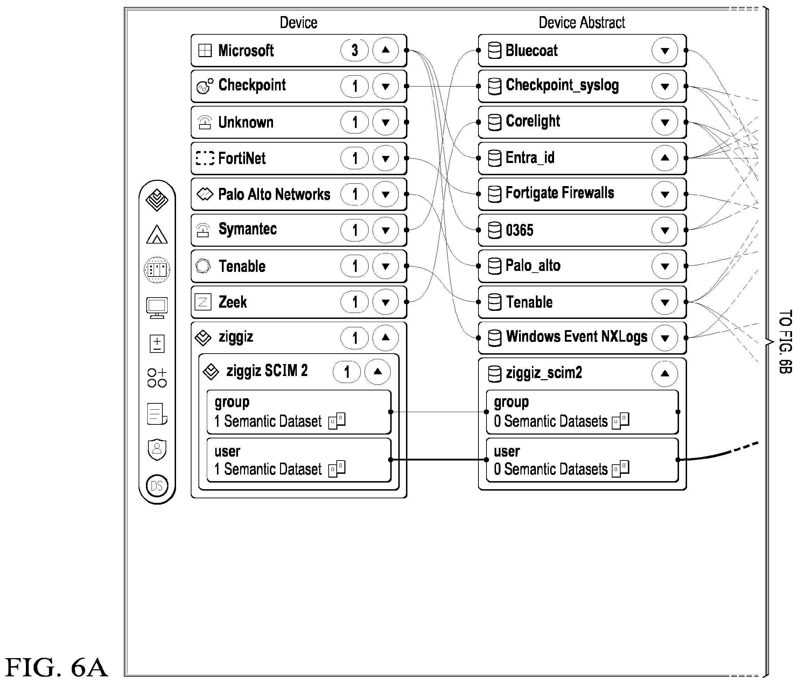

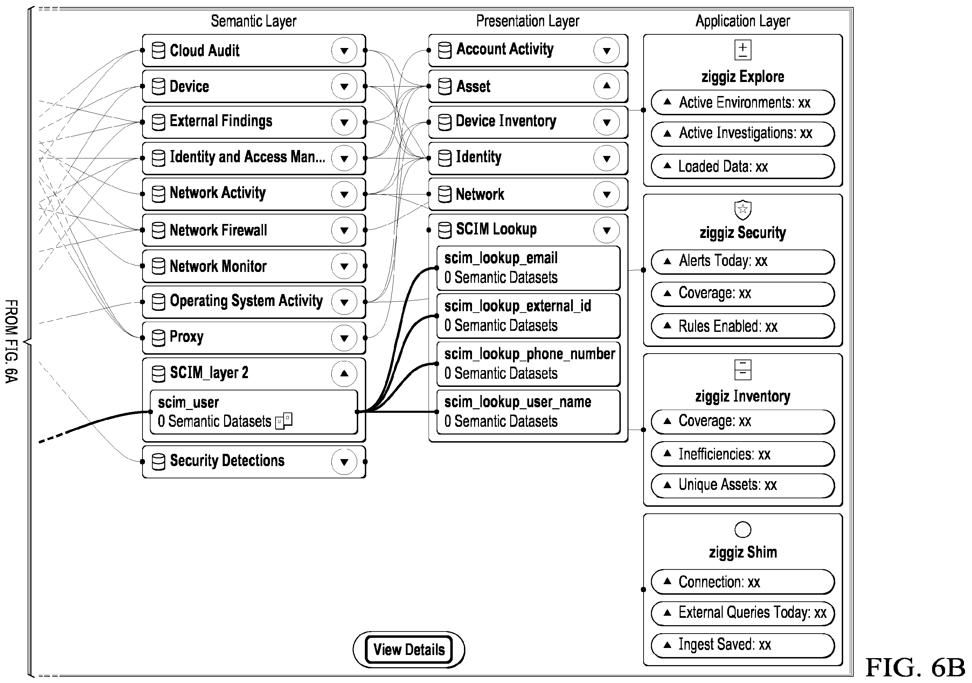

The SDG is organized into a set of distinct horizontal layers, each representing a progressively higher level of abstraction from raw device data through to business applications consuming that data. In the embodiment depicted in FIGURES 4A and 4B, five layers are shown. A Device Layer occupies the leftmost position and contains nodes representing raw data feeds from specific device models and versions (e.g., Fortigate 60F v1.2.3) as well as abstract data sources such as SaaS services. Moving rightward, a Device Abstract Layer groups devices into product types by vendor, such as Fortigate Firewalls. The next layer, the Semantic Layer, normalizes data by semantics rather than by vendor or source, with nodes representing concepts such as Network Firewall. A Presentation Layer formats normalized data for application-specific consumption (e.g., Device Inventory). An Application Layer occupies the rightmost position and contains nodes representing business applications that consume data from the preceding layers (e.g., ziggiz Explore, ziggiz Security). Each layer of the SDG thus represents a tier of a multi-tiered semantic model in which concepts at each tier are mapped to concepts in adjacent tiers, such that the full SDG represents a directed graph in which the set of nodes representing concepts in a more specific tier are joined by directed edges to nodes representing concepts in the next more abstract tier to which those nodes are mapped. By mapping data sources to nodes in the least abstract Device Layer, the semantic model may be traversed in a reverse direction starting from any concept in a more abstract layer to determine all data sources associated with that concept through the chain of directed edge mappings. This reverse traversal capability is the basis for the lineage highlighting operation described with respect to FIGURES 5A and 5B and the end-to-end lineage visualization described with respect to FIGURES 6A AND 6B.

This layered organization is a technical improvement over prior SDG visualization approaches that either presented the full graph without structural scaffolding, making it cognitively overwhelming at scale, or restricted visualization to narrow subsets of the graph (e.g., only lineage within a single pipeline or only schema relationships within a single data source). By constraining the visualization to a defined set of layers, each associated with a distinct level of abstraction and a distinct semantic purpose, the system provides various anchor points at which users from different roles can engage with the graph. For example, a data engineer may anchor their exploration to the Device Abstract Layer when evaluating which device types are feeding a particular semantic concept, while a compliance officer may anchor to the Semantic Layer when assessing which semantic categories of data flow into a specific application. Meanwhile, an executive seeking a high-level understanding of the organization's data estate can engage with the zoomed-out five-layer view without ever needing to drill into field-level detail.

Directed edges connect nodes across layers, representing the mappings, transformations, and data lineage relationships between data sources at different levels of abstraction. The presence and direction of these edges communicates at a glance which data sources contribute to which downstream nodes and ultimately which applications, enabling users to trace data provenance and understand dependencies without requiring technical knowledge of the underlying pipeline implementations. Edge properties, including width and color, may be used to encode additional information about the relationships they represent (e.g., edge width indicating relative data volume on a given path, edge color indicating health status or the presence of mapping issues), enabling users to identify high-traffic paths or problematic connections directly from the zoomed-out view.

Nodes in the Application Layer may be displayed with operational metrics readouts reflecting the live state of the applications consuming the SDG. For example, the ziggiz Security node is depicted as displaying metrics for alerts today, coverage, and rules enabled. A technically significant property of these application-layer metrics is that a single application-layer node may aggregate data from a large number of heterogeneous distributed data sources across the enterprise, all of which are associated with the application-layer node through the chain of directed edge mappings in the underlying SDG data model. A user viewing the application-layer metrics readout therefore receives a consolidated view of the operational output of potentially many underlying device-level sources without needing to be aware of the nature, type, number, or distribution of those sources. This consolidation is made possible by the semantic normalization architecture of the SDG layers, wherein data from heterogeneous device-level sources is progressively abstracted through the Device Abstract Layer and Semantic Layer until it is decoupled from the specific schemas and formats of the originating devices before being consumed by the Application Layer. Surfacing these application-layer metrics directly within the SDG visualization connects the abstract data estate view to concrete business outcomes, allowing users to easily understand the operational significance of the data flows visible in the graph. This is a technical improvement over prior systems in which data lineage and application monitoring were presented in entirely separate interfaces with no visual connection between them.

Nodes in the Device Layer and Device Abstract Layer include expand controls (e.g., down arrow indicators) that, when selected, reveal the datasets contained within that data source directly within the graph visualization. This interaction triggers a state change in the visualization that is described in greater detail with respect to FIGURES 6A AND 6B, wherein the selected node expands to show its constituent datasets as sub-nodes, with edges connecting those datasets to corresponding nodes and datasets in other layers.

The unified presentation of all five layers within a single coherent visual model, accessible to all user roles through the same interface, is a core technical contribution of the system. Prior solutions typically fragmented the user experience by role, providing data engineers with pipeline views, compliance teams with audit exports, and security teams with alert dashboards, with no shared visual representation of the underlying data estate connecting these perspectives. The Semantic Center's unified view ensures that all stakeholders share a common conceptual model of the data estate, reducing the organizational silos that arise when different teams operate with divergent mental models of how data flows through the organization.

FIGURES 5A and 5B illustrate the Semantic Center view following a user interaction in which a user selects a node within one of the SDG layers. FIGURE 5A shows what may be displayed on the left portion of the user interface with FIGURE 5B showing what may be displayed to the right of FIGURE 5A, for example. In response to this interaction, the system performs a lineage highlighting operation in which all edges and nodes that form part of the full end-to-end data flow connected to the selected node, including both upstream contributors and downstream consumers, are visually distinguished from the remainder of the graph, for example by rendering the relevant edges and nodes in a bolder weight or contrasting color relative to non-participating elements. Edges and nodes that do not participate in the lineage of the selected node are visually de-emphasized, allowing the user to isolate the relevant data flow within the full zoomed-out view without triggering a separate navigation action or leaving the current view state.

The lineage highlighting operation is produced by a graph traversal executed against the stored directed graph data model of the SDG, traversing edges in both directions from the selected node to identify all participating nodes and edges across all layers. Because the SDG is stored as a directed graph in which each node is associated with its incoming and outgoing edge connections at the data model level, this traversal can be performed against the stored data model without requiring a re-query of the underlying data sources or a re-computation of the full graph layout, and the results of the traversal are applied as a rendering state update to the already-rendered graph rather than triggering a full re-render. This means the lineage highlighting operation imposes only the cost of the graph traversal and the rendering state update, rather than the cost of re-fetching or re-rendering the full graph, which is particularly significant in large data estates where the full graph may contain a large number of nodes and edges.

This interaction pattern allows users to simultaneously understand both the provenance of a given data source (e.g., which raw device feeds and abstract device representations ultimately contribute to it) and its downstream impact (e.g., which presentation datasets and business applications ultimately consume it), within a single lightweight selection interaction in the main graph view. Thus even a user who is unfamiliar with the organization's data estate can select any node in any layer and immediately receive a visual representation of that node's complete lineage path from the Device Layer through to the Application Layer. This represents a technical improvement over lineage visualization systems in which users are required to navigate to a dedicated lineage view for a specific asset and which presents lineage only for assets the user had explicitly searched for or navigated to. Rather, such embodiments enable surfacing full end-to-end lineage contextually within a unified graph view.

The lineage highlighting operation is performed at the data source level in the zoomed-out view depicted in FIGURES 5A and 5B, meaning that the highlighted path shows which data source nodes across all layers participate in the selected node's end-to-end lineage, rather than which individual datasets or fields do so. This is consistent with the progressive disclosure approach described elsewhere herein, wherein finer-grained detail is revealed through zoom interactions rather than being presented by default. When the user subsequently zooms in following a lineage-highlighting interaction, the system reveals the dataset-level connections within the highlighted lineage path, as described with respect to FIGURES 6A AND 6B.

The end-to-end lineage highlighting of the such an embodiment has distinct practical applications for different user roles engaging with the same interaction. For example, for compliance users, selecting a node in the Semantic Layer (e.g., Network Firewall) immediately reveals which raw device feeds contribute to that semantic category and which applications consume it, providing the information needed to scope an audit or assess regulatory exposure without requiring manual traversal of the graph. For data engineers, selecting a node in the Device Abstract Layer reveals all downstream semantic datasets and applications that would be affected by a change to that abstraction layer, enabling impact assessment before modifying mappings or onboarding replacement devices. For security operations users, selecting a node in the Application Layer reveals the full set of data sources feeding that application's detections, making it possible to identify gaps in data coverage that could affect detection efficacy.

FIGURES 6A and 6B illustrate the Semantic Center following a zoom-in interaction applied to the zoomed-out view of FIGURES 4A and 4B, representing the intermediate level of the progressive disclosure hierarchy. FIGURE 6A shows what may be displayed on the left portion of the user interface with FIGURE 6B showing what may be displayed to the right of FIGURE 6A, for example. At this zoom level, nodes that were previously displayed as single collapsed data source bubbles expand to show their constituent datasets as sub-nodes within the parent data source node. Edges connecting data sources across layers are correspondingly refined to connect at the dataset level rather than the data source level, showing precisely which datasets within a given data source map to which datasets in adjacent layers. In the embodiment depicted in FIGURES 6A AND 6B, the lineage shown in FIGURES 5A and 5B is carried forward into the zoomed-in view, such that the datasets revealed within each data source node are shown with their lineage connections intact. Within the Device Layer, the ziggiz data source node expands to reveal datasets including a group dataset and a user dataset, each labeled to indicate the number of semantic datasets to which they relate (e.g., "1 semantic dataset").

In FIGURES 6A AND 6B, it can be seen that a node of the Device Abstract Layer expands to reveal multiple datasets, including datasets receiving an edge from datasets in the Device Layer sending one or more edges to datasets in downstream layers. This example illustrates a technically important property of the SDG's layered architecture: a single dataset at the Device Layer (e.g., a raw SCIM 2 user feed from a specific vendor implementation) maps through the Device Abstract Layer into a vendor-agnostic representation, which then maps into multiple semantically normalized datasets in the Semantic Layer, which may then in turn fan out into multiple presentation-specific datasets in the Presentation Layer that format the data for different application consumption patterns. This progressive normalization and fan-out structure is what enables the system to decouple raw data sources from downstream applications, such that replacing a device vendor at the Device Layer (e.g., switching from one identity provider to another) requires only updating the mappings at the Device Abstract Layer rather than modifying every downstream application that consumes identity data. The dataset-level view makes this decoupling structure directly visible to users, providing a practical tool for assessing the impact of changes to upstream data sources and for identifying which applications would be affected by a given infrastructure change. This represents a technical improvement over prior systems in which vendor lock-in was difficult to assess or mitigate because no unified visual representation existed connecting raw device feeds through to downstream application dependencies.

The "N semantic datasets" indicator displayed on each dataset sub-node serves as a contextual indicator communicating how broadly a given dataset's data is consumed within the semantic model. A dataset labeled as relating to one semantic dataset indicates a relatively direct mapping, while a dataset with a higher count indicates that its data is normalized into a larger number of semantic representations, suggesting broader downstream relevance.

Each semantic dataset represented in the SDG is generated based on incoming data streams from data sources and a user-defined template that includes a set of definitions for a representative data structure (e.g., a set of database tables or entries) for the fields of the dataset, along with semantic annotations that may be applied to the individual data fields of the dataset definition. These semantic annotations are utilized throughout the data management system to process data of that dataset, including to drive sparse field extraction operations in which only the specific fields of the dataset associated with a given use case are extracted from incoming raw data rather than all fields, reducing the processing and storage overhead of making that data available for downstream consumption. The "N semantic datasets" count for a given dataset sub-node therefore reflects the number of semantic concepts in the underlying data model to which that dataset's field definitions are mapped, which is a stored property of the data model retrieved at render time rather than a value computed dynamically during rendering, allowing the indicator to be displayed without imposing additional computational overhead beyond the retrieval of the stored count.

The dataset-level zoom view also serves as an entry point for a user selection as described with respect to FIGURES 5A and 5B. In response to a user selecting a given dataset, the system performs lineage highlighting in which all edges and datasets that form part of the data flow feeding into the selected dataset are visually distinguished from the remainder of the graph, for example by rendering the relevant edges and nodes in a bolder weight or contrasting color relative to non-participating elements of the graph. This interaction is particularly useful at the dataset level because it allows users to focus on a specific data flow (e.g., the full lineage of a particular identity dataset from raw device feed through to a specific application) through reducing the visual noise of unrelated data sources and their connections. The ability to perform this isolation at the dataset level rather than only at the data source level provides finer-grained control over the displayed graph and enables use cases such as compliance lineage exports that need to capture full dataset-level provenance of specific data flows.

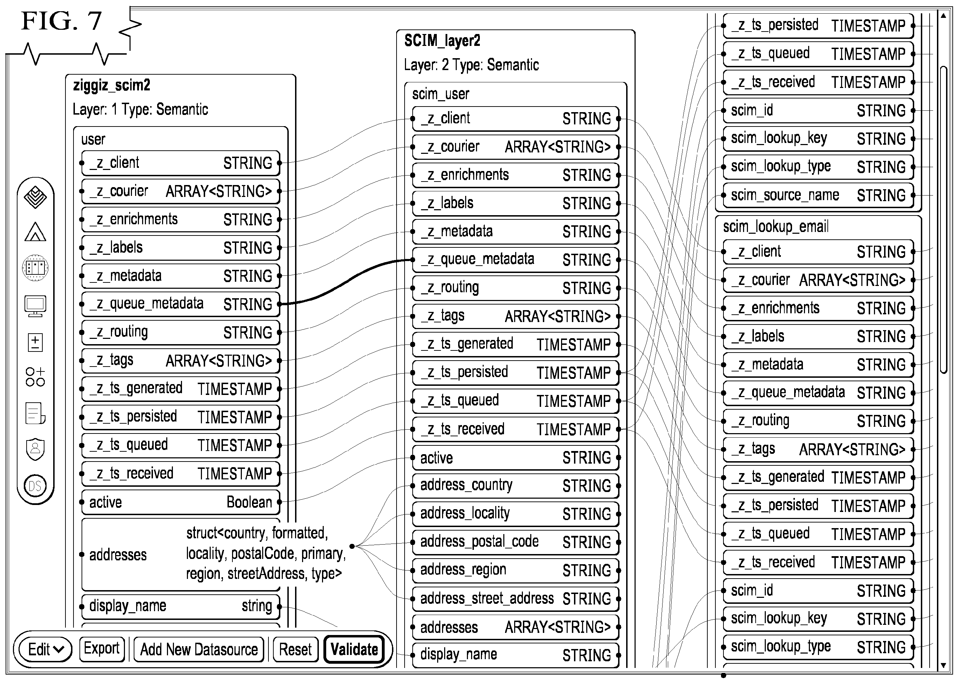

FIGURE 7 illustrates the Semantic Center following a further zoom-in interaction applied to the dataset-level view of FIGURES 6A AND 6B, representing the most granular level of the progressive disclosure hierarchy. At this zoom level, the contents of individual dataset nodes are expanded to reveal their constituent fields, displayed with their names and data types (e.g., _z_client (STRING)). Edges between datasets are correspondingly refined to connect at the field level, showing precisely which fields within a source dataset map to which fields in a destination dataset.

Depicted in FIGURE 7 is a particularly significant property of the field-level view is its ability to represent one-to-many field mappings, wherein a single field in a source dataset maps to multiple fields in a destination dataset. This mapping reflects a transformation operation in which a single compound field containing, for example, address information in array form is decomposed into multiple discrete typed fields at the destination layer, each capturing a specific component of the address (or other) information of the relevant source dataset. The visual representation of this one-to-many relationship at the field level makes the nature and complexity of the transformation directly legible to users without requiring them to inspect underlying pipeline code or transformation logic.

The edges shown at the field level in FIGURE 7 represent stored extraction function associations between source and destination fields in the underlying data model, rather than being computed at render time. Each field in a dataset's schema has an associated extraction function stored in the data model that specifies how to locate and transform the corresponding data from the source format into the destination field's defined type. The field-level edges in FIGURE 7 are a visual rendering of these stored extraction function associations, meaning the system retrieves the stored field-to-field mapping relationships from the data model to render the field-level edges rather than deriving those relationships through any computation at the time of rendering. This stored-association rendering approach means the computational cost of displaying field-level mappings is bounded by the retrieval cost of the stored associations rather than by any mapping computation, regardless of the complexity of the transformations those associations represent.

This field-level visibility is a technical improvement over other systems that either do not expose field-level lineage at all or expose it only in tabular schema views disconnected from the broader graph context. By presenting field-level mappings as edges within the same unified graph visualization used for data source and dataset level views, the system allows users to move fluidly between levels of abstraction without switching tools or interfaces. A data engineer investigating a data quality issue, for example, can begin at the zoomed-out view of FIGURES 4A and 4B to identify the relevant data source, zoom to the dataset level of FIGURES 6A AND 6B to identify the relevant dataset, and zoom further to the field level of FIGURE 7 to inspect the specific field mappings and transformation logic implicated in the issue, all within a single continuous zoom interaction within the Semantic Center.

The field-level view also exposes the typing system applied to fields across layers, with each field labeled with its data type (e.g., STRING, ARRAY<STRING>, TIMESTAMP). The type information displayed for each field at this zoom level reflects the stored schema definitions for each field in the underlying data model, including any type transformations defined in the associated extraction functions (e.g., a source field defined as a 32-bit integer whose extraction function specifies transformation to a 64-bit integer will be displayed at the destination with the destination type). This means the type system visible in the field-level view is a direct rendering of the stored data model rather than a separately maintained display property, ensuring that the type information shown is always consistent with the actual extraction function definitions without requiring any additional synchronization between the visualization layer and the data model. The visibility of type information at this zoom level supports use cases such as identifying type mismatches between source and destination fields that could cause data quality issues, and verifying that transformation expressions applied at the mapping level (e.g., as defined in the edit dataset mapping interface of FIGURE 19) are appropriate for the types of the fields involved. The progressive disclosure of type information at the field level, rather than surfacing it at higher zoom levels where it would add visual noise without sufficient context, is consistent with the system's approach of modulating exposed complexity based on the user's current level of engagement with the graph.

Each expanded dataset node in the field-level view is labeled with its layer number and type (e.g., "Layer: 1 Type: Semantic", "Layer: 2 Type: Semantic"), providing users with persistent orientation context as they navigate into the most detailed level of the graph. This labeling ensures that users do not lose their positional awareness within the five-layer SDG architecture even when the zoom level is such that only a small portion of the overall graph is visible on screen.

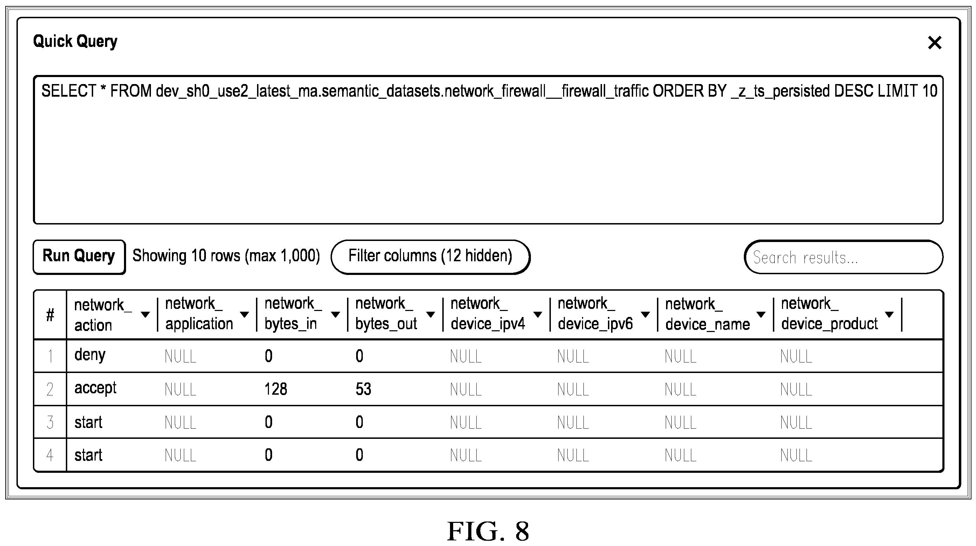

FIGURE 8 illustrates a query interface that is surfaced as a pop-up window when a user selects a query element on a dataset node within the dataset-level view of FIGURES 6A AND 6B. The query interface allows users to compose and execute structured queries (e.g., SQL) against the selected dataset directly within the Semantic Center, enabling users to filter, sort, and explore the fields of the dataset without navigating away from the graph visualization.

The query interface presents a text input area in which the user can enter a query expression referencing the fields of the selected dataset by name, and a results area in which the output of the query is displayed. Because the field names available for querying correspond to the fields defined in the dataset's stored schema within the semantic data graph, the query interface operates against the same stored schema that is visualized at the field level in FIGURE 7, ensuring consistency between the graph visualization and the query environment without requiring a separate schema lookup or connection to the underlying data source.

This query capability is a technical improvement over systems in which exploring field-level data requires leaving the graph visualization and navigating to a separate query or analytics tool. By surfacing the query interface as a pop-up within the existing graph view and scoping it automatically to the selected dataset, the system reduces the number of navigation steps and context switches required to move from a high-level graph view to a field-level data exploration, and eliminates the need for the user to re-specify the dataset of interest in a separate query environment.

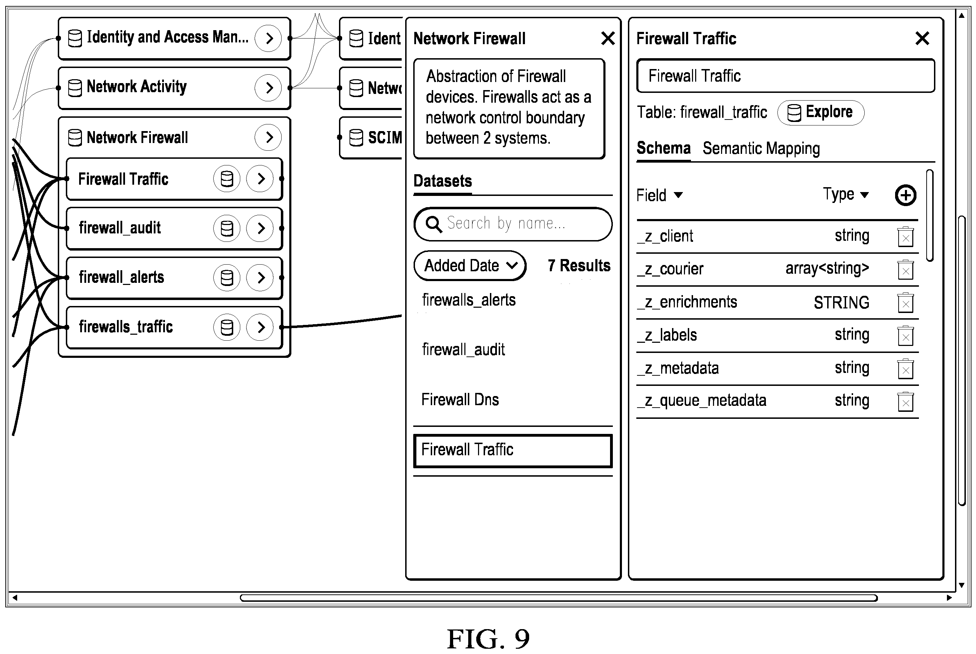

FIGURE 9 illustrates an information panel view that is surfaced as an overlay on top of the graph when a user selects an information element on a dataset node within the dataset-level view of FIGURES 6A AND 6B. The overlay presents one or more information panels providing contextual detail about the parent data source node and the selected dataset node, allowing users to inspect descriptive and structural metadata for various levels of the hierarchy within a single interaction.

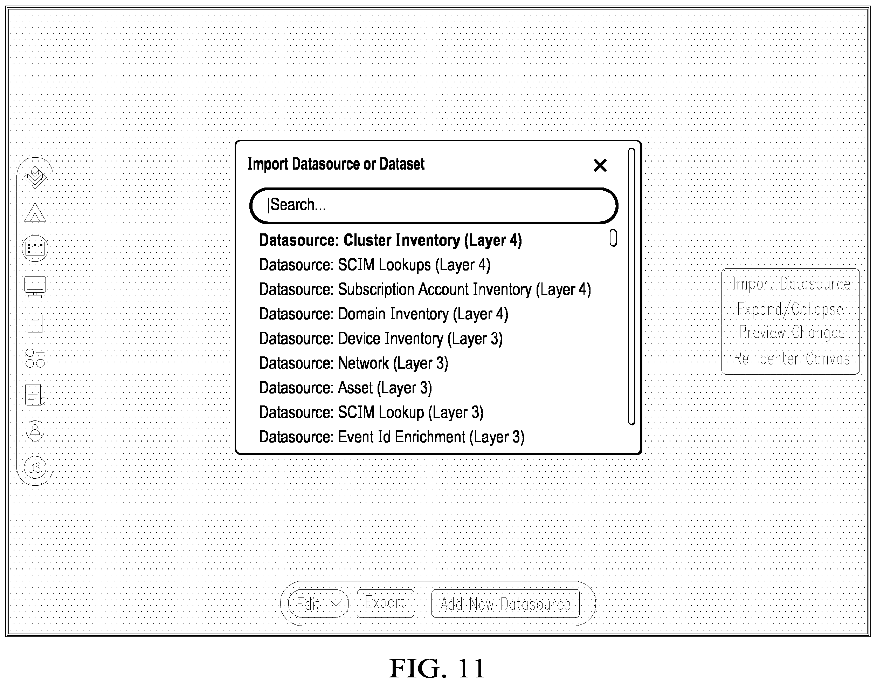

A first panel may present information about the parent data source, including its name, a description of its purpose and the type of data it produces, and current datasets associated with it in the semantic data graph. A second panel may present information about the selected dataset, including its name, description, and a listing of its fields with their names, data types, and any semantic label annotations attached to those fields as defined by the one or more users through the dataset authoring interaction described with respect to FIGURE 11. Moreover, in some embodiments, the information described above with respect to a first panel and a second panel may be presented in a single information panel.

The functionality of displaying data source context and dataset field detail within a single pop-up overlay is a technical improvement over systems in which understanding both the purpose of a data source and the structure of a specific dataset within it requires navigating to separate documentation, catalog entries, or schema inspection tools. By surfacing both levels of contextual information as a single lightweight interaction within the graph visualization, the system allows users to orient themselves to an unfamiliar data source and assess the relevance of its datasets and fields to their current task without leaving the graph view or incurring the navigation and retrieval overhead of consulting external documentation.

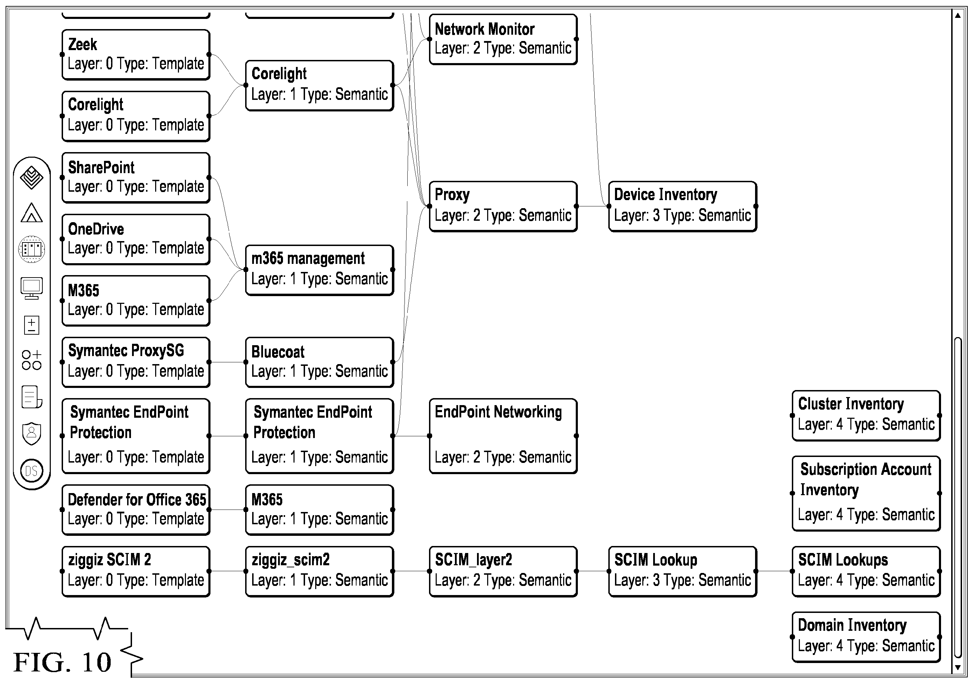

FIGURE 10 illustrates the Semantic Editor in its unfiltered data source view, which presents the complete universe of data sources available within the system, including both data sources that have been associated with the SDG and those that have not yet been incorporated into any lineage path. This view is accessible via the navigation toolbar described with respect to FIGURE 3 and serves as the starting point for users who are constructing or modifying the SDG rather than consuming it.

In the unfiltered view, data sources are arranged in columns corresponding to the layer of the SDG to which they belong or are candidates to belong. All nodes in the leftmost column are labeled "Layer: 0 Type: Template," indicating that they represent raw device-level data source templates that have not yet been mapped into the SDG's abstraction hierarchy. The Layer 0 Type Template designation reflects a specific state in the data source provisioning lifecycle: a Layer 0 node represents a data source configuration that is available for instantiation as an active mapped data source in the SDG but may not yet have been associated with a concept in the SDG's underlying directed graph data model. When a Layer 0 template is instantiated, it is associated with a concept in the Device Layer of the SDG and an ingest pipeline is created for it that defines the internal schema for storing data from that source and the extraction functions for mapping raw data from that source into the internal schema. Prior to association with the Device Layer of the SDG, the template is available in the unfiltered view as a candidate for onboarding but does not participate in any active lineage path and therefore emits no edges. Nodes in subsequent columns are labeled with their respective layer numbers and type (e.g., "Layer: 1 Type: Semantic", "Layer: 2 Type: Semantic"), reflecting their position within the five-layer architecture described with respect to FIGURES 4A and 4B. Data flows strictly from left to right in this view, meaning that no node in a given column emits an edge unless it receives at least one edge from a node in the column to its left, back through to Layer 0. This constraint is enforced visually by the absence of outgoing edges from any node that has no incoming lineage, making it immediately apparent to users which data sources are currently unconnected and therefore represent gaps or opportunities in the data estate.

The inclusion of unassociated data sources alongside associated ones in the unfiltered view provides a technically useful function: it allows users to assess the completeness of the SDG at a glance without requiring a separate query or report to identify which available data sources have not yet been incorporated without requiring manual inspection of configuration files, separate catalog queries, or reliance on documentation (that may be out-of-date). By rendering associated and unassociated data sources within the same visual interface, differentiated by the presence or absence of edges and by their layer type labels, the system eliminates the need for these auxiliary lookups and reduces the computational overhead associated with generating separate completeness reports.

Those of skill in the art will also recognize that the left-to-right data flow constraint also serves a rendering efficiency function. Because the system enforces directionality at the data model level, the layout algorithm for the unfiltered view can resolve node positions and edge paths in a single left-to-right traversal of the graph rather than requiring a more computationally expensive general graph layout algorithm that must account for arbitrary edge directions. This is particularly significant at enterprise scale where the number of data sources and their inter-layer relationships may be large, and where a general layout algorithm would impose substantially higher rendering costs.

The unfiltered view in the Semantic Editor is distinct from the Semantic Center views of FIGURES 4 through 7 in that it shows all available data sources regardless of whether they participate in any active lineage path, whereas the Semantic Center shows only data sources that have been incorporated into the SDG. This distinction is consequential for data engineering workflows: a user working in the Semantic Editor can use the unfiltered view to identify candidate data sources for onboarding, assess their layer assignments, and determine which layers they would need to be connected to in order to contribute to downstream semantic datasets and applications. Users can build or modify this unfiltered view using the authoring canvas described with respect to FIGURE 11.

FIGURE 11 illustrates the import data source menu that is surfaced when a user selects to import data sources within the Semantic Editor. The Semantic Editor provides an authoring canvas that is distinct from the read-only Semantic Center views described with respect to FIGURES 4 through 10. By maintaining distinct view states for consumption and authoring, the system avoids the need to render the full interactive editing apparatus (e.g., contextual toolbars, mapping editors, schema definition forms, transformation expression fields) for users who are only consuming the SDG. This reduces the computational resources required to render the Semantic Center view for the majority of users who have no authoring role, and avoids surfacing editing controls that could inadvertently trigger state changes in the SDG when accessed by non-authoring users.

The Semantic Editor authoring canvas provides persistent access to editing operations including options to edit or create new nodes (e.g., datasets or data sources) or edges (e.g., mappings between datasets or data sources) and options to expand the view of the SDG to the left or right (e.g., showing more layers or more nodes on layers to the left or right of the recently added node or the node selected for editing). Within the Semantic Editor, users can select to import a data source to bring up the import data source menu of FIGURE 11.

The import data source menu presents a searchable list of available data sources, each labeled with its name and its layer assignment within the SDG architecture (e.g., "Datasource: Network Firewall (Layer 2)", "Datasource: Cluster Inventory (Layer 4)", "Datasource: Domain Inventory (Layer 3)"). The search bar at the top of the menu allows users to filter the displayed list by name, reducing the time required to locate a specific data source in environments where the total number of available data sources is large.

Importing a data source into the Semantic Editor is not merely a visualization operation but initiates or references a provisioning process that associates the data source with a concept in the SDG's underlying directed graph data model. Specifically, when a data source is provisioned through this workflow, it is associated with a concept in the most specific tier of the semantic model representing the configuration of that data source (e.g., a specific device type, software version, or service), and an ingest pipeline is created for it that defines the internal schema for storing data from that source and the extraction functions for mapping raw data from that source into that internal schema. The layer label displayed alongside each data source in the import menu reflects this association, indicating the tier of the semantic model to which the data source will be mapped upon import.

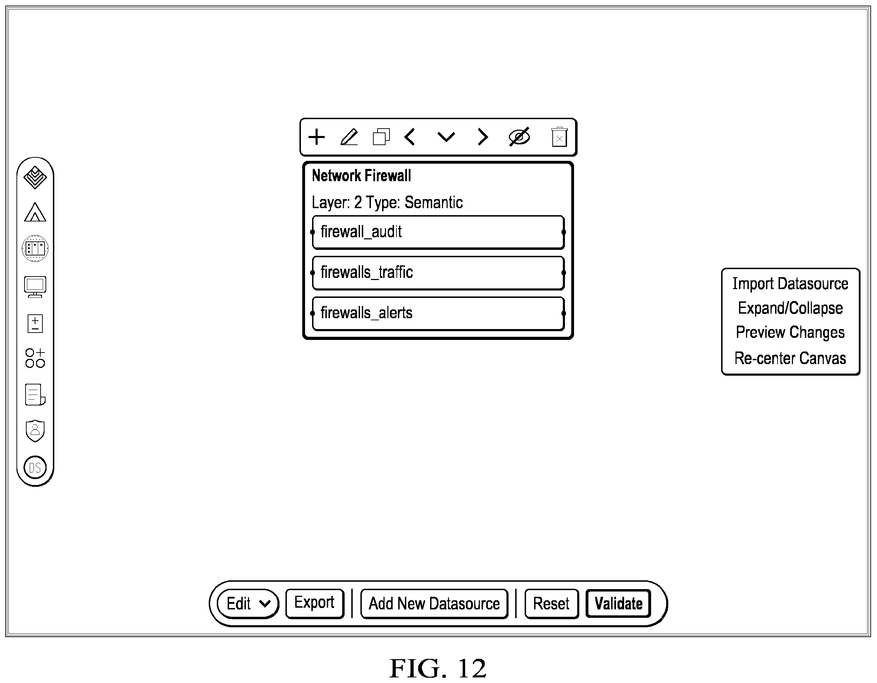

FIGURE 12 illustrates the Semantic Editor canvas following the import of a data source, depicting the state of the canvas after a user has selected and confirmed the import of the Network Firewall data source from the menu of FIGURE 11. The imported data source is rendered as a node on the canvas, labeled with its name (Network Firewall), its layer assignment and type (Layer: 2 Type: Semantic), and its constituent datasets (firewall_audit, firewalls_traffic, firewalls_alerts) displayed as sub-nodes within the parent node.

Upon import, the system automatically renders the data source node with its pre-existing dataset structure populated, meaning the user does not need to manually define the datasets that already exist within a data source when importing it into the editor. This pre-population is significant from a rendering and data retrieval standpoint because the system fetches and renders only the structural metadata (e.g., dataset names, layer assignment, type) required to display the node at its default expanded state, deferring the retrieval of field-level schema information and mapping details until the user explicitly requests that level of detail through further interaction (e.g., via the edit dataset mapping interaction). This deferred loading approach reduces the volume of data that must be retrieved and rendered when a node is first imported, which is particularly beneficial when importing data sources with large numbers of datasets or fields.

A contextual toolbar is rendered immediately above the imported node upon its appearance on the canvas, providing access to node-level operations without requiring the user to navigate to a separate menu or toolbar. The contextual toolbar is rendered in proximity to the node it acts upon rather than in a fixed location on the screen, which means its position updates as the user pans or repositions nodes on the canvas, keeping the relevant controls for that node consistently accessible without requiring the user to move their cursor to a fixed toolbar location at the edge of the screen.

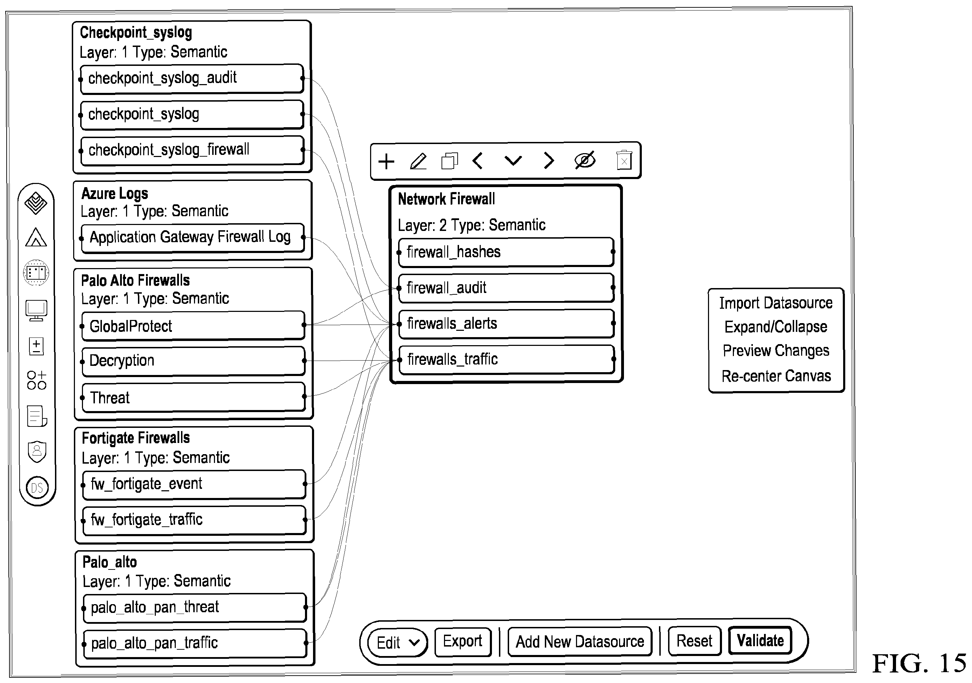

The expansion controls in the contextual toolbar trigger a connection expansion operation in which the system retrieves and renders the nodes that are connected to the current node in the specified direction within the SDG layer hierarchy. For example, selecting the expand left control on the Network Firewall node (Layer 2) causes the system to retrieve and render the Device Abstract Layer nodes (Layer 1) that have mappings into the Network Firewall datasets, as depicted in FIGURE 15. This on-demand expansion approach is a technically important rendering optimization: rather than loading and rendering the full connected subgraph of a data source node at import time, the system renders only the imported node and defers the rendering of connected nodes until the user explicitly requests expansion in a given direction. In a large data estate where a given semantic layer node may be connected to many upstream device abstract layer nodes, each of which may itself be connected to many device layer nodes, loading the full connected subgraph at import time would impose substantial retrieval and rendering costs. The on-demand expansion model bounds the initial rendering cost to a single node regardless of the complexity of its connections, and incrementally incurs additional rendering costs only as the user navigates the graph in directions relevant to their current task.

The hide control in the contextual toolbar allows users to remove a node from the current canvas view without deleting it from the SDG, providing a mechanism for reducing visual complexity in editing sessions where many nodes have been imported but only a subset are currently relevant to the user's active task.

Other node-level operations the user can perform include adding dataset subnodes to data source nodes, editing associations between subnodes and nodes or between nodes of one layer and nodes of another layer (e.g., mapping via a dragging selection), and creating a node.

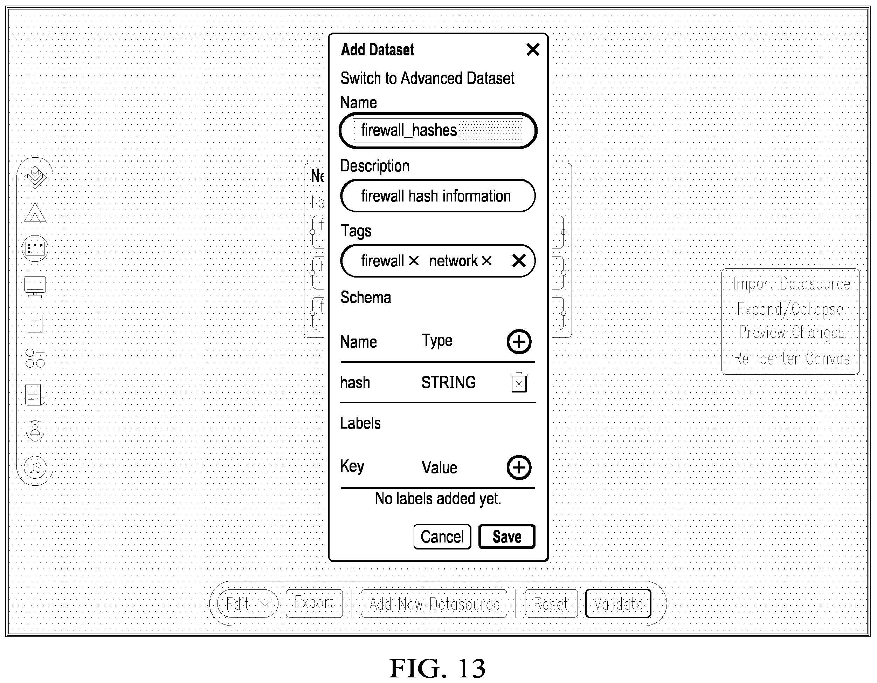

FIGURE 13 illustrates the interface to add a dataset to a node that is surfaced when a user selects to add a dataset to a node that is displayed in the Semantic Editor as in FIGURE 12. The interface provides fields for defining the properties of a new dataset to be added to the selected data source node, including a name field, a description field, a tags field, a schema section with name and type columns for defining the fields that the dataset will contain, and a labels section with key and value columns for attaching metadata labels to the dataset.

The add dataset form operates within the canvas editing environment rather than navigating the user to a separate schema design interface, meaning the canvas state and the current node context are preserved while the form is open. This inline form approach avoids the navigation overhead and context switching associated with systems in which dataset creation requires leaving the graph view and entering a dedicated schema design tool, and then returning to the graph view to verify that the newly created dataset had been correctly associated with the intended data source. By surfacing the dataset creation form as a canvas-level interaction triggered directly when the user has imported/selected the relevant node, the system ensures that the new dataset is automatically scoped to the correct parent data source without requiring the user to re-specify that association in the form, thus eliminating a class of authoring errors in which datasets are created in isolation and subsequently associated with incorrect parent nodes.

The schema section of the form allows users to define the fields that the new dataset will contain by entering field names and selecting their data types from a set of supported types (e.g., STRING, ARRAY<STRING>, TIMESTAMP).

The labels section allows users to attach key-value metadata pairs to the dataset at creation time, providing the mechanism by which fields within the dataset are annotated with semantic concepts that inform how downstream data sources in higher SDG layers consume and map those fields into their own datasets. These labels constitute the semantic annotation mechanism that enables downstream systems to identify and extract relevant fields from incoming data based on semantic definitions rather than raw field names. Specifically, when a use case (e.g., investigation workspace or monitoring/alert rule) is defined in the system specifying data needs in terms of semantic concepts rather than specific field names or data source schemas, the system resolves which fields to extract from incoming data by matching the semantic annotations stored in the dataset's label metadata against the semantic concepts specified by the use case. This means that use cases defined against semantic annotations remain valid even when the underlying field names or data source schemas change, as long as the semantic annotations associated with those fields are preserved, providing a layer of abstraction between application definitions and raw data source schemas that reduces the fragility of downstream applications and use cases to changes in upstream data sources.

For example, a label applied to a field in a Device Abstract Layer dataset may indicate the semantic concept that field represents (e.g., a user identifier), enabling downstream Semantic Layer and Presentation Layer data sources to identify and reference appropriately labeled fields when constructing their own dataset schemas and mappings. By capturing these semantic annotations within the same authoring interaction used to define the dataset's schema, the system ensures that label metadata is available to downstream mapping operations immediately upon the dataset being added to the SDG, without requiring a separate annotation step that would otherwise need to be completed before downstream data sources could correctly reference the new dataset's fields.

When the user selects the save control, the system validates the complete dataset definition and, if no validation errors are present, commits the new dataset to the parent data source node and triggers a corresponding update to the SDG's rendered representation. The labels defined for the new dataset are stored as part of the dataset's metadata and are immediately available to downstream data sources in higher SDG layers when those data sources are establishing field-level mappings, reducing the lookup and traversal cost of establishing cross-layer mappings in subsequent authoring operations and ensuring that the label index used to resolve field references during mapping operations reflects the current state of the SDG without requiring a separate reindexing step after each new dataset is added.

The interface of FIGURE 13 may likewise be displayed when a user selects to edit an existing dataset from within the Semantic Editor. The edit dataset form also serves as the mechanism by which fields that were deferred from initial dataset creation are subsequently added to the dataset's schema.

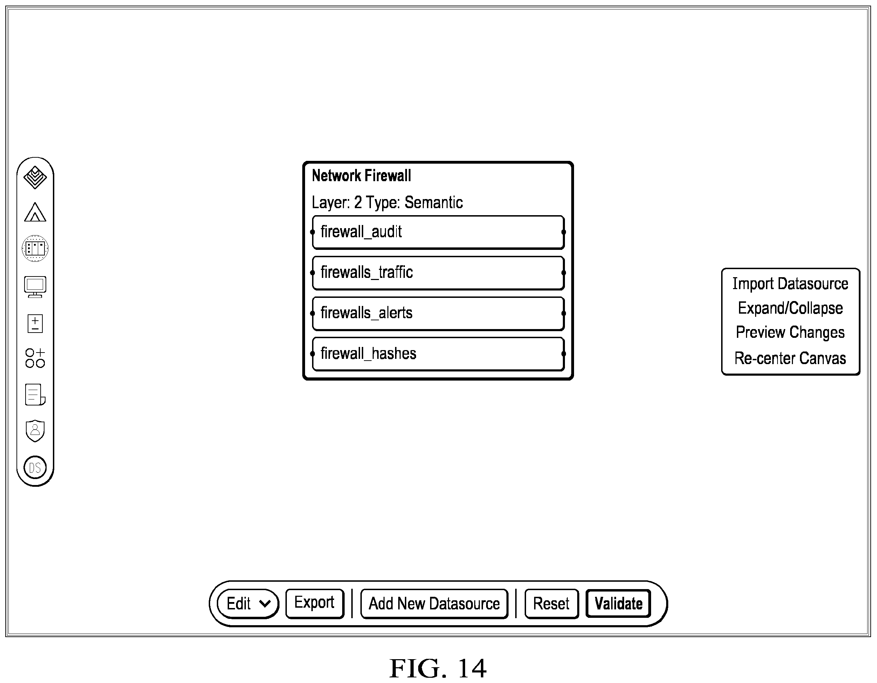

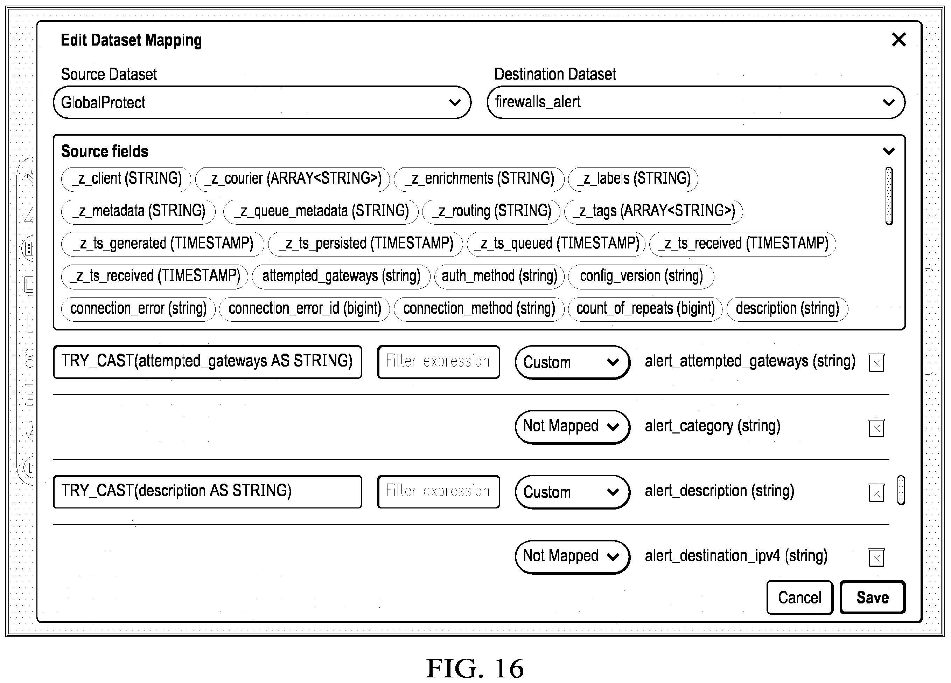

FIGURE 14 illustrates the canvas state of the Semantic Editor following the save of a newly added dataset, showing the parent data source node updated to include the new dataset as an additional sub-node alongside the datasets that were present at import time. This figure illustrates the result of the node-scoped canvas update described with respect to FIGURE 13, confirming that the addition of a new dataset to a node is reflected in the node's visual representation without altering the position, state, or visual representation of any other element on the canvas. The newly added dataset sub-node is immediately available as a target for the connection expansion interactions described with respect to FIGURE 15 and the dataset mapping interactions described with respect to FIGURE 16.

The updated node state shown in FIGURE 14 also represents the starting point for subsequent authoring operations in which the new dataset is connected to datasets in adjacent layers. Because the firewall_hashes dataset has been added to a Layer 2 Semantic Layer node, it can receive mappings from Device Abstract Layer (Layer 1) datasets that can be seen via the expand left interaction and can emit mappings to Presentation Layer (Layer 3) datasets that can be seen via the expand right interaction, both of which are accessible from the contextual toolbar of FIGURE 12.

FIGURE 15 illustrates the canvas state of the Semantic Editor following the selection of the expand left control from the contextual toolbar of FIGURE 12 on the Network Firewall node (Layer 2, Semantic Layer). In response to this interaction, the system retrieves and renders the Device Abstract Layer nodes (Layer 1) that have pre-existing dataset-level mappings into the Network Firewall datasets, populating the canvas to the left of the Network Firewall node with the retrieved upstream nodes and drawing edges between their datasets and the corresponding Network Firewall datasets.

In the embodiment depicted, the expansion reveals five Device Abstract Layer nodes arranged vertically to the left of the Network Firewall node: Checkpoint Syslog, Azure Logs, Palo Alto Firewalls, Fortigate Firewalls, and Palo Alto. Each upstream node is labeled Layer: 1 Type: Semantic and displays its constituent datasets with edges connecting those datasets to specific datasets within the Network Firewall node. For example, the Palo Alto node's palo_alto_pan_threat dataset connects to both firewalls_alerts and firewalls_traffic, illustrating a many-to-one mapping relationship at the dataset level.

The on-demand nature of this expansion operation is a key rendering efficiency property of the system. The upstream nodes and their dataset-level connections are retrieved and rendered only in response to the user's explicit expand left interaction, rather than being loaded as part of the initial import of the Network Firewall node. In the depicted example, the expansion reveals five upstream nodes each containing multiple datasets with multiple cross-node edges, representing a non-trivial rendering operation that would have imposed unnecessary cost at import time if performed speculatively. In a production data estate where a given Semantic Layer node may be connected to a larger number of upstream Device Abstract Layer nodes, each containing more datasets and more cross-node edges than shown in this example, the cost savings of deferring this retrieval and rendering to an explicit user interaction are correspondingly larger.

The expanded canvas state shown in FIGURE 15 also serves as the starting point for the dataset mapping editing interaction described with respect to FIGURE 16, wherein a user selects an edge between an upstream dataset and a Network Firewall dataset to inspect and modify the field-level mapping that the edge represents. The availability of the upstream nodes and their edges on the canvas following the expand left operation means that the user can proceed directly to editing any of the visible mappings without requiring an additional retrieval or navigation step, reducing the number of interactions required to move from a high-level view of upstream connections to a granular field-level mapping edit.

The selection of the other expansion arrows displayed on the toolbar of FIGURE 12 may likewise lead to the SDG expanding in other directions corresponding to the arrow directions. For example, selecting the right expansion arrow would show a nextmost downstream layer and selecting the right expansion arrow a second time would cause the downstream layer from that to also be displayed.

FIGURE 16 illustrates the edit dataset mapping form that is surfaced when a user selects an edge between two dataset nodes on the Semantic Editor canvas, for example following the expand left operation described with respect to FIGURE 15. The form allows users to inspect and modify the field-level mapping that the selected edge represents, defining how individual fields from a source dataset are transformed and mapped into fields of a destination dataset across SDG layers.

The form presents a source dataset selector and a destination dataset selector, pre-populated with the datasets connected by the selected edge (e.g., GlobalProtect as the source dataset and firewalls_alerts as the destination dataset in the depicted embodiment). The form also presents a source fields panel displaying the set of fields available in the source dataset as selectable elements (e.g., _z_client (STRING), _z_courier (ARRAY<STRING>), _z_ts_generated (TIMESTAMP)). This pre-populated source field list is retrieved from the stored schema of the source dataset at the time the form is opened, meaning the system does not need to query the underlying data source at mapping edit time to determine what fields are available for mapping. The use of the stored schema as the basis for the source field list is a technically significant design decision: it means that mapping definitions can be authored and validated against the SDG's internal schema representation without requiring a live connection to the underlying data source, allowing mapping authoring to proceed even when the underlying data source is unavailable, and avoiding the latency and connectivity overhead of a live schema query during the mapping editing interaction.

The mapping definition of FIGURE 16 defines how specific source fields or expressions map to specific destination fields. Each mapping specifies a source, a destination, and a mapping type. The source expression field accepts both direct field references and transformation expressions (e.g., TRY_CAST(attempted_gateways AS STRING)), allowing users to define mappings that involve type casting, string manipulation, or other transformations at the point of mapping definition. These transformation expressions correspond to the extraction functions stored in the SDG's data model for each field-to-field mapping, defining how data extracted from a source field is transformed before being stored according to the destination field's type definition.

The pre-population of both the source field list and the existing mapping entries from the SDG's stored schema and mapping metadata means that the edit dataset mapping form presents a complete picture of the current mapping state between two datasets without requiring the user to reconstruct that state from raw pipeline configurations or external documentation. This is a technical improvement over systems in which understanding the field-level mapping between two datasets in different pipeline stages requires inspecting transformation code, ETL configurations, or schema documentation that may be maintained separately from the pipeline itself or be out-of-date.

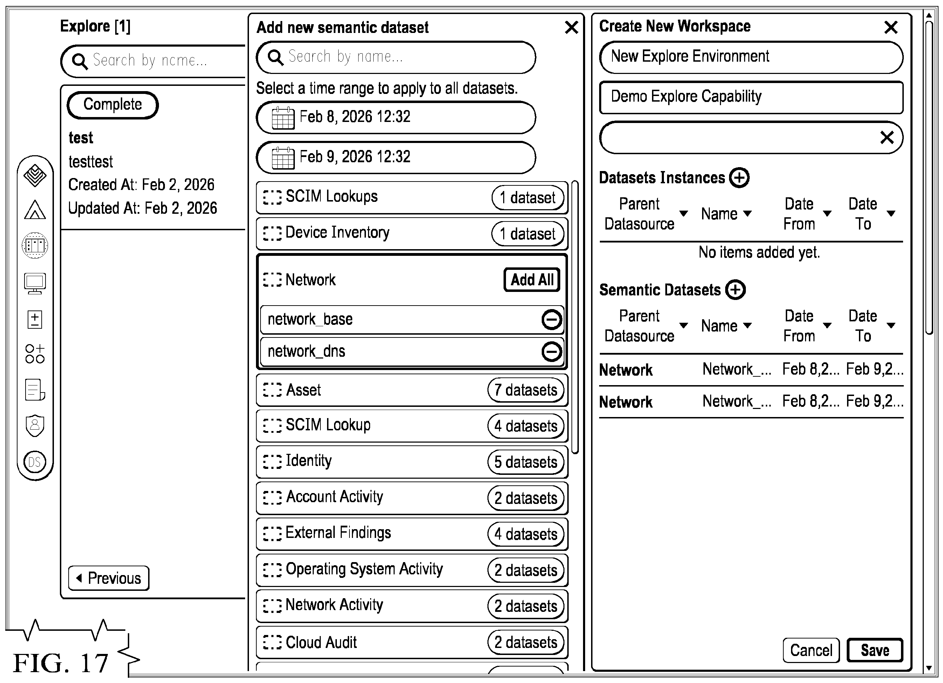

FIGURE 17 illustrates the create new workspace dialog that is surfaced when a user initiates the creation of a new investigation environment from the Explore tab of the system. When setting up the investigation workspace, the user can define the workspace's metadata, such as a title, a description, and connections associating the workspace with one or more external compute environments (e.g., a Databricks connection). The user may also associate data with a workspace, including Dataset Instances (e.g., raw physical datasets from specific data sources) and Semantic Datasets (e.g., semantically normalized datasets from the SDG's Layers).

The distinction between Dataset Instances and Semantic Datasets within the workspace creation reflects a technically important property of the system's data access model. Dataset Instances represent raw, physical data from specific device-level or abstract-level data sources (e.g., a specific firewall vendor's log dataset), while Semantic Datasets represent data that has been normalized through the SDG's layered mapping architecture into a semantic representation (e.g., the network_base or network_dns datasets of the Network semantic layer node). By allowing users to include both types of data within a single investigation workspace, the system supports investigation workflows that require both the semantic consistency of normalized data and access to the raw device-level data that underlies it, without requiring the user to construct separate workspaces for each data type or to manually join normalized and raw datasets outside the system.

The workspace creation workflow defines a data set by a set of criteria and a time period, and the data sources associated with those criteria are determined by traversing the semantic model from the specified concepts back to the data sources at the least abstract tier. When a user selects Semantic Datasets for inclusion in a workspace, the system performs this traversal against the stored SDG data model to identify all data sources contributing to the selected semantic datasets, such that the workspace automatically encompasses data from all heterogeneous distributed data sources associated with those semantic concepts without requiring the user to identify or enumerate those sources individually. A user specifying a workspace based on a semantic concept of interest (e.g., network_firewall) may not be aware of the nature, type, number, or distribution of the underlying device-level data sources that contribute to that concept, but the system's traversal of the stored directed graph data model resolves all such contributing sources automatically at workspace creation time.

The workspace creation dialog may also include a time range selector that applies a common time range to all datasets added to the workspace. This shared time range is editable and applied at workspace creation time to scope the data loaded into the workspace to the specified period. This time-scoped loading approach means the system retrieves and processes only the data within the specified time window rather than loading the full history of each included dataset, representing a significant reduction in data retrieval and processing cost compared to an approach where the full dataset history is loaded and filtered at query time. Furthermore, before initiating retrieval of raw data for the specified time range, the system first determines whether data associated with the selected datasets and time range has already been indexed in association with another project (e.g., another workspace or a monitoring/alert rule). If such data is already present, it is associated with the new workspace by reference rather than being re-processed from the raw data store, avoiding redundant indexing of data that has already been processed and reducing the computational overhead of workspace provisioning for time ranges that overlap with previously created workspaces.

The save control at the bottom of the dialog commits the workspace definition, triggering the system to provision the workspace and initiate the loading of the specified datasets for the specified time range, after which the workspace becomes accessible from the Explore tab as described with respect to FIGURE 19.

FIGURE 17 also illustrates the add semantic dataset sub-menu that is surfaced when a user selects the plus sign control adjacent to the Semantic Datasets section of the workspace creation dialog. The sub-menu presents a searchable list of semantic data sources available within the SDG, each expandable to reveal the individual datasets it contains, along with a time range selector that allows the user to specify the date range for which data from the selected datasets will be loaded into the workspace.

The data sources presented in the sub-menu correspond to the nodes of the SDG, reflecting the system's data access model in which semantic datasets are sourced from the normalized layers of the SDG rather than from raw device-level data sources. Data source entries can be selected to expand to reveal their constituent datasets, each of which can be individually selected for inclusion in the workspace, or all datasets within a data source can be added.

The search capability within the sub-menu allows users to filter the displayed data source list by name, reducing the navigation cost of locating specific semantic datasets in environments where the SDG contains a large number of nodes.

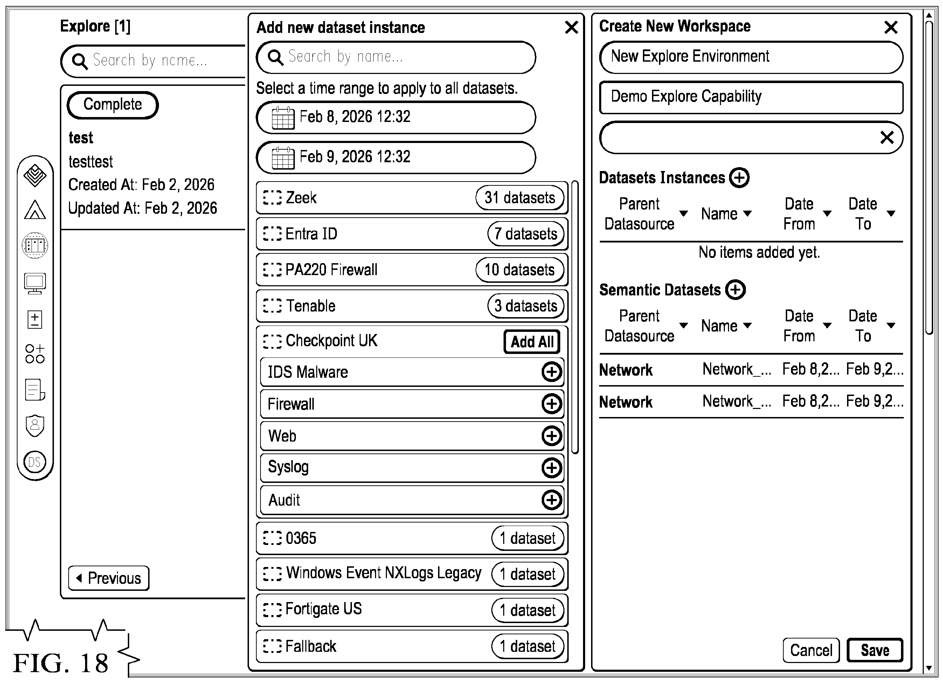

FIGURE 18 illustrates the add dataset instance sub-menu that is surfaced when a user selects the plus sign control adjacent to the Dataset Instances section of the workspace creation dialog of FIGURE 17. The sub-menu presents a searchable list of raw data sources available within the system, each expandable to reveal their constituent datasets, and functions analogously to the add semantic dataset sub-menu of FIGURE 17 but scoped to raw data sources rather than semantic data sources.

The inclusion of raw Dataset Instances alongside Semantic Datasets in the workspace creation workflow is technically significant for investigation use cases where the normalized semantic representation of data is insufficient for the investigation's requirements and direct access to raw device-level data is needed. For example, a threat hunter investigating a potential intrusion may need to examine raw firewall logs from a specific device at the field level to identify indicators of compromise that are not captured in the normalized network_firewall semantic dataset, while simultaneously using the semantic dataset to correlate activity across multiple firewall vendors. The system's support for including both raw and semantic data in the same workspace, configured through the same workspace creation workflow, means this combined investigation capability is available without requiring the user to construct and manage separate data access configurations for raw and normalized data.

FIGURE 19 illustrates the Explore tab of the system populated with saved investigation workspaces, representing the view that users encounter after one or more workspaces have been created through the workflow described with respect to FIGURES 17 and 18. The tab presents a list of workspace entries, each displaying the workspace name, status (e.g., complete, pending), description, creation and update timestamps, associated Dataset Instances, associated Semantic Datasets, external connections, and controls for opening the workspace or opening it in a new window. The search bar allows users to locate workspaces by name, providing a direct lookup mechanism as an alternative to scrolling through the full list.

FIGURE 20 illustrates the rules tab of the system, which provides the interface through which security detection rules are defined, managed, and monitored. The rules tab is shown as including a searchable list of security rules annotated with the current status of each rule. The rules tab is also shown as including a panel interface containing a plurality of fields for entering/modifying the detailed definition of a selected or new rule.

Each entry in the rules list displays the rule's name, a brief description, a status indicator, and any tags associated with the rule (e.g., attack.t1498). The panel interface presents the full definition of the selected rule, including its name, description, type, and definition. The panel interface also shows when the rule was last updated, associated tags, and recent alerts. The definition section enables the user to enter or modify the rule's configuration in a structured format (e.g., YAML) and includes fields such as title, id, status, description, author, date, tags, and the data sources or semantic datasets (e.g., palo_alto, palo_alto_pan_threat) against which the rule is evaluated. The specification of the data sources and semantic datasets rather than raw data source identifiers is a technically significant property of the system's rule definition model: because rules reference semantic datasets (or data sources that can be mapped to semantic datasets) that are defined at the SDG layer level rather than specific vendor implementations, a rule defined against, for example, a network_firewall semantic dataset remains valid and continues to fire against all Device Abstract Layer data sources that contribute to that semantic dataset, regardless of which specific firewall vendors are present in the data estate. This means that onboarding a new firewall vendor into the SDG's Device Layer and establishing its mappings through the Device Abstract Layer into the relevant Semantic Layer datasets is sufficient to bring that vendor's data within scope of all existing detection rules that reference those semantic datasets, without requiring any modification to the rules themselves.

This vendor-agnostic rule definition capability is a direct consequence of the SDG's semantic normalization architecture and the use case definition model of the underlying data management system, wherein use cases and rules are defined against semantic concepts of the SDG rather than against specific data source schemas or field names. Because the system resolves which data sources and fields are in scope for a given rule by traversing the stored directed graph data model from the specified semantic concept back to the contributing data sources at the Device Layer, any change to the set of contributing data sources (e.g., adding a new vendor, replacing an existing vendor) is automatically reflected in the scope of all rules that reference the affected semantic concepts, without requiring any rule modification. This means the set of data sources evaluated by a given rule is determined dynamically at evaluation time by the current state of the SDG's directed graph data model rather than being statically encoded in the rule definition itself, decoupling the rule's logical definition from the physical data sources that satisfy it.

FIGURE 21 illustrates the detections tab of the system, which presents alert events that have been generated by the security detection rules defined in the rules tab of FIGURE 20. Each detection entry in the list displays the rule name that generated the alert, the times at which the alert was triggered and queued, a unique alert identifier, the semantic dataset used for the detection, the event source that produced the alerting data, the offending data payload, associated metadata, and an investigate control.

The association of the normalized semantic dataset against which the detection rule was evaluated and the specific raw data source whose data, once transformed into that semantic dataset through the SDG's layered mapping architecture, triggered the alert enables traceability from alert to semantic dataset to physical source and may be determined by the system using the lineage information stored in the SDG, meaning the user does not need to manually traverse the SDG to determine which raw data source contributed the alerting data. This presents an advantage over systems in which tracing an alert back to its originating raw data source requires manual inspection of pipeline configurations or lineage documentation (that may be maintained separately from the alerting system or be out-of-date).

The determination of alert-to-source traceability using the stored SDG lineage information means that the detection information can be rendered with the data source attribution already resolved. This is a rendering efficiency property of the system: the lineage information associated with each detection entry may be retrieved from stored alert metadata rather than being derived through a live query of the SDG data model at render time, bounding the rendering cost of the detections list to the cost of retrieving stored alert records regardless of the complexity of the lineage paths that produced those alerts.

The offending data payload displayed within each detection entry represents the sparse set of fields extracted from the incoming data at the time the detection rule was evaluated, rather than the full raw data record from the originating data source. This sparse payload reflects the system's use case driven sparse field extraction architecture, wherein only the specific fields associated with a given use case or detection rule are extracted from incoming raw data and stored in association with that use case, rather than all fields of the raw data record.

The investigate control associated with each detection entry triggers the creation of a new investigation workspace in the Explore tab, pre-configured with the datasets relevant to the triggering alert and scoped to a time window surrounding the alert timestamp (e.g., approximately four hours on either side of the alert time). This automated workspace provisioning from a detection event reduces the setup time for investigation workflows by eliminating the manual workspace configuration steps described with respect to FIGURES 17 and 18: rather than requiring the investigator to identify the relevant data sources, select the appropriate datasets, and specify an appropriate time range through the workspace creation dialog, the system derives all of these parameters from the alert's metadata and lineage information at the time the investigate control is selected. The time window applied to the investigation workspace is centered on the alert timestamp rather than requiring the investigator to determine an appropriate time range from scratch, ensuring that the loaded data captures the activity surrounding the alert event without loading unnecessarily large volumes of data outside the relevant period.

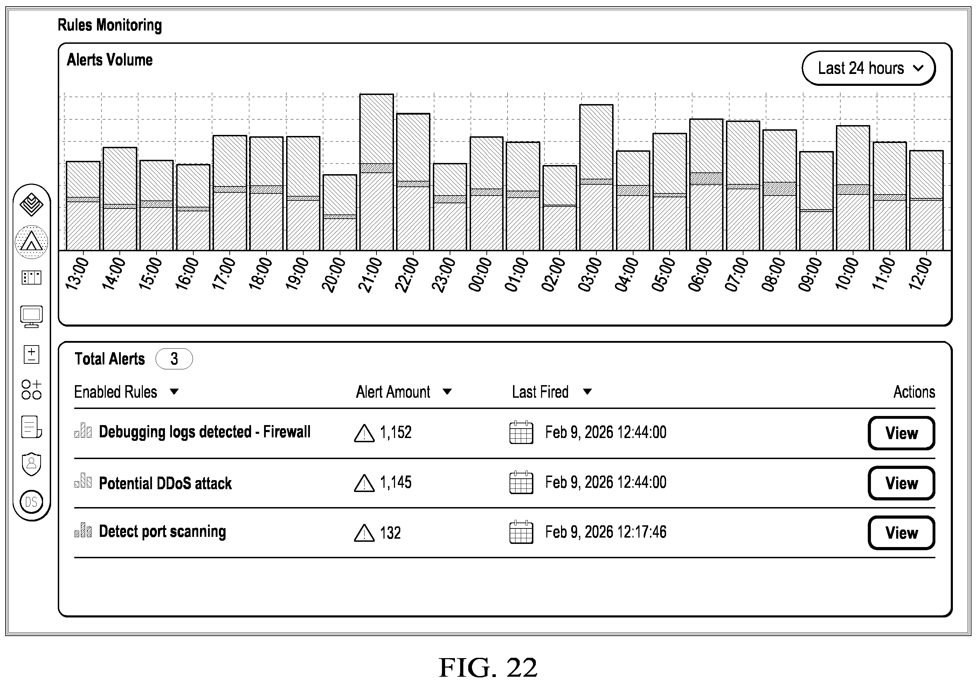

FIGURE 22 illustrates the rules monitoring dashboard of the system, which provides a visualization of alert volume over a specified duration. As previously described, the system may perform evaluations on data associated with a rule to determine if certain criteria have been met, resulting in the generation of a notification (e.g., an alert). The alert chart in the upper panel of FIGURE 22 depicts the aggregation of these notifications over time. The alert dashboard also includes a summary of the rules (e.g., sets of evaluation criteria) that were monitored for alert inclusion in the alert chart.

The chart visualization in the upper panel comprises a graphical representation of notification volume (e.g., alert volume) over a temporal range (e.g., how many events occurred within some previous time period). The horizontal axis represents a time window, such as a 24-hour period. The vertical axis signifies data volumes of notifications. In this embodiment, the visualization is rendered as a segmented bar graph, where the total height of a bar represents the aggregate volume of notifications for a discrete interval, and individual segments within that bar represent the contribution of specific rules to that volume, where the individual segments may be color coded according to which rule triggered is associated with that volume of notifications (e.g., color and height of the individual segments correlating to the rules and their magnitude of alerts). The stacked presentation of per-rule alert volumes within each time interval allows users to identify both absolute alert volume trends over time and the relative contribution of individual rules to those trends within the same chart, without requiring separate queries or chart renders for each rule.

The second, lower section provides a tabular summary of enabled rules and their associated metrics. Each entry includes a notification count for the selected window and a "last fired" timestamp. This timestamp serves as a health indicator for data flows and is particularly significant for security operations use cases because it provides an immediate indicator of whether a rule that is expected to fire regularly has recently gone silent, which may indicate a gap in data coverage (e.g., a data source feeding the relevant semantic dataset has stopped ingesting) rather than an absence of the activity the rule is designed to detect.

From the alert view, the user can select to view the detections associated with a given rule, which may cause an interface similar to the one shown in FIGURE 21 to appear wherein the specific detections associated with the alert corresponding to the user's "view" input are shown, thus providing a direct navigation path from the alert monitoring view to the individual alert events underlying each rule's count. This direct navigation eliminates the need for the user to manually apply rule-based filters in the detections view to achieve the same scoped view, reducing the interaction cost of drilling down from a monitoring summary to individual alert events.

FIGURE 23 illustrates the storage tab of the system, which provides a time-series view of data volume processed through the SDG's semantic layer data sources on a particular time-based (e.g., hourly) basis. The tab presents a stacked bar chart in which the vertical axis represents recorded bytes per hour, the horizontal axis represents time progressing hour by hour across multiple days, and each bar's different colored stacked segments represent the contribution of individual data sources to the total data volume processed during that hour. The colors and heights of the bars thus communicate the data flow volume for particular data sources to viewing users.

The representation of data volume at the data source level rather than at the raw physical data source level is a technically significant property of this view. Because the SDG's layered mapping architecture normalizes data from multiple physical sources into shared semantic datasets, the volume metrics displayed in the storage tab reflect the consolidated throughput of the semantic model rather than the raw ingest volumes of individual device feeds. This means that the storage view provides an accurate representation of the data processing load imposed by the semantic model as a whole, including the effects of the field-level transformations and mappings defined through the Semantic Editor, rather than simply reflecting raw ingest volumes that do not account for the processing overhead of semantic normalization. For example, a semantic layer data source that receives data from a large number of Device Abstract Layer data sources may show a higher byte volume than any individual contributing physical source, reflecting the consolidation of multiple raw streams into a single normalized semantic representation.

A user may select or hover over a segment of a bar on the bar chart to view the data flow (e.g., byte volume) associated with each data source for that chunk of time.

The tab navigation at the top of the storage view provides access to alternative views of storage data at different granularities (e.g., semantic_layer_hourly, datasources_hourly, datasources_hourly_param), allowing users to specify the time criteria by which the data indicated by the semantic datasets associated with the displayed data sources are chunked for display. This tab-level navigation means the system can determine and render each level of granularity of the storage view on demand as the user selects it rather than calculating and loading all granularity levels simultaneously, reducing the initial data processing and retrieval costs of viewing per-data-source data flows at different levels of granularity in the storage tab.

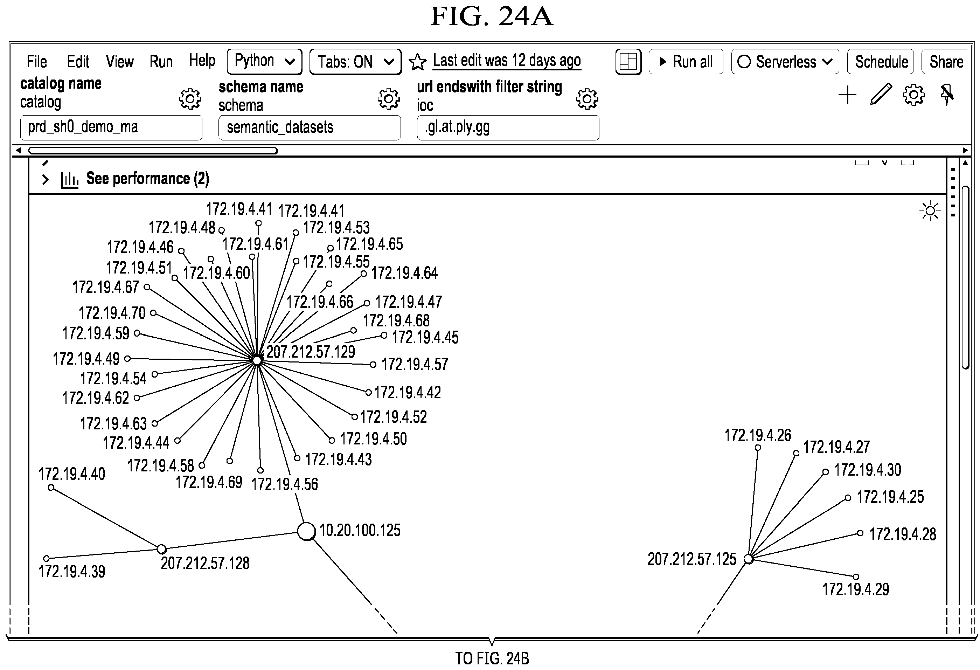

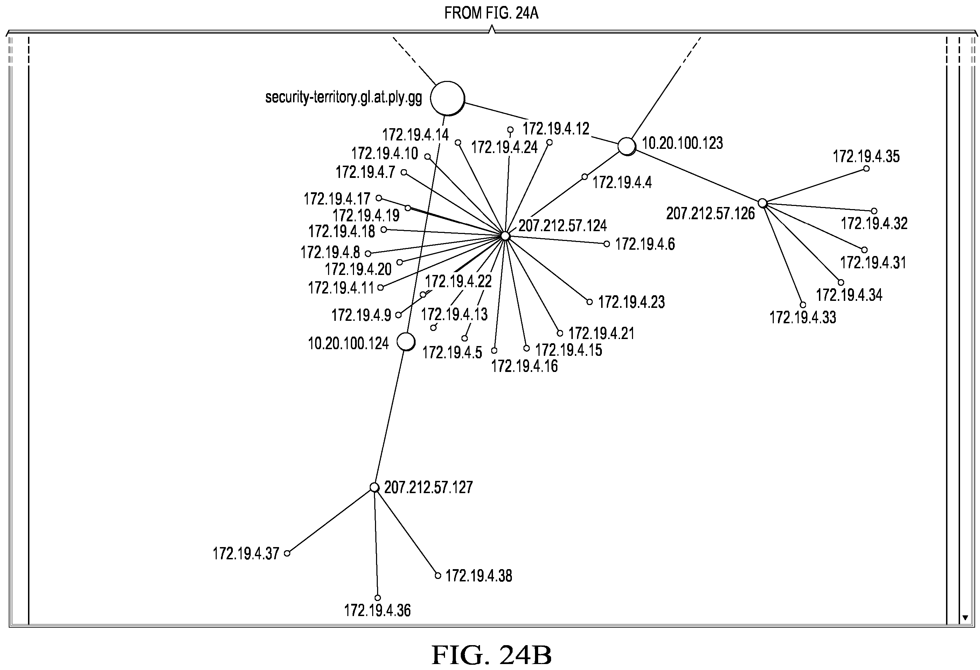

FIGURES 24A and 24B illustrate a blast radius visualization indicating a map of security detections against data sources generated by the system based on criteria specified by the user while setting up an investigation environment or one or more monitoring/alert rules. FIGURE 24A shows what may be displayed on the upper left portion of the user interface with FIGURE 24B showing what may be displayed to the right and below the elements of FIGURE 24A, for example. In the visualization of FIGURES 24A and 24B, data from multiple data sources has been combined to map the network relationships between devices implicated in a specific security event. In the depicted embodiment, the visualization shows the set of devices that communicated with a specific URL as identified through web proxy semantic data, and the set of devices that those implicated devices themselves communicated with as identified through network firewall semantic data, producing a graph of network relationships that extends outward from the initial point of compromise in two hops.

The blast radius visualization is generated based on investigation workspace data or monitoring/alert rule data provisioned through the workflows described herein, in which a user has selected both web proxy semantic datasets and network firewall semantic datasets for inclusion in the workspace or rule and specified a time range surrounding the event of interest. The system combines the pre-mapped and pre-normalized data from these two semantic sources to produce the blast radius graph without requiring the user to manually join raw data from the underlying raw data sources, write custom query logic to correlate device identifiers across the two data types, or perform any additional data preparation steps. This pre-mapped data combination capability is a direct consequence of the SDG's semantic normalization architecture: because both web proxy data and firewall data are normalized into shared semantic representations that use consistent field definitions and identifiers (e.g., consistent device identifiers, IP address representations, and timestamp formats across sources), the system can correlate records from these two sources within the investigation workspace using the pre-established semantic mappings rather than requiring ad hoc correlation logic to be constructed at rendering time.

The technical significance of this pre-mapping approach is substantial in the context of security investigation workflows. In other systems, producing a blast radius visualization of this kind often requires security analysts to identify the relevant raw data sources, extract the relevant data for the time period of interest, reconcile differences in field naming conventions and data formats across sources (e.g., different representations of IP addresses or device identifiers in firewall logs versus proxy logs from different vendors), write and execute join queries to correlate device activity across sources, and then visualize the resulting dataset. Each of these steps imposes both processing overhead and the risk of errors introduced by manual data reconciliation. By pre-computing the semantic mappings and normalizations through the SDG's layered architecture and making the resulting normalized data available for combination on demand, the system reduces the blast radius generation workflow to the rule or investigation configuration steps described herein and the visualization interaction of FIGURES 24A and 24B, eliminating the intermediate data preparation steps described above with respect to other systems entirely.

The portability of this blast radius investigation or rule capability across different enterprise deployments is a further technical property of the system's semantic normalization architecture. Because the blast radius investigation/rule is defined in terms of semantic concepts (e.g., web proxy data, network firewall data) rather than specific vendor implementations, the same investigation configuration can be executed in any enterprise deployment where those semantic concepts are represented in the SDG, regardless of which specific firewall or proxy vendors are present in that deployment. The system's traversal of the stored graph data model at workspace provisioning time resolves the specific contributing data sources for those semantic concepts in each deployment automatically, without requiring any modification to the investigation or rule configuration itself. This means that investigation workflows and monitoring/alert rules, and their associated visualizations, that are developed for one enterprise deployment are portable to other deployments that share the same semantic model structure, providing the same vendor-agnostic portability for investigation and monitoring workflows that the semantic normalization architecture provides for detection rules as described with respect to FIGURE 20.

The two-hop structure of the blast radius graph (devices that visited the URL, and devices that those devices communicate with) illustrates the system's ability to chain relationship queries across the combined dataset, producing a graph that extends beyond the immediately implicated devices to surface the broader network neighborhood that may be at risk. This chained relationship query capability leverages the consistent semantic representations of network activity data across the web proxy and firewall sources to traverse device relationships that span both data types, which would not be possible without the semantic normalization that the SDG's mapping architecture provides. The resulting visualization gives security operations teams a pre-computed, visually navigable representation of the scope of a potential compromise that would otherwise require substantial manual analysis to produce, reducing the time between alert detection and scope assessment in active incident response scenarios.

Those skilled in the relevant art will appreciate that the invention can be implemented or practiced with other computer system configurations including, without limitation, cloud deployed computing systems or server (e.g., either physical or virtual), multi-processor systems, network devices, mini-computers, mainframe computers, data processors, and the like. The invention can be embodied in a general-purpose computer, or a special purpose computer or data processor that is specifically programmed, configured, or constructed to perform the functions described in detail herein. The invention can also be employed in distributed computing environments, where tasks or modules are performed by remote processing devices, which are linked through a communications network such as a LAN, WAN, and/or the Internet.

In a distributed computing environment, program modules or subroutines may be located in both local and remote memory storage devices. These program modules or subroutines may, for example, be stored or distributed on computer-readable media, including magnetic and optically readable and removable computer discs, stored as firmware in chips, as well as distributed electronically over the Internet or over other networks (including wireless networks). Example chips may include Electrically Erasable Programmable Read-Only Memory (EEPROM) chips. Embodiments discussed herein can be implemented in suitable instructions that may reside on a non-transitory computer readable medium, hardware circuitry or the like, or any combination and that may be translatable by one or more server machines. Examples of a non-transitory computer readable medium are provided below in this disclosure.

Although the invention has been described with respect to specific embodiments thereof, these embodiments are merely illustrative, and not restrictive of the invention. Rather, the description is intended to describe illustrative embodiments, features and functions in order to provide a person of ordinary skill in the art context to understand the invention without limiting the invention to any particularly described embodiment, feature, or function, including any such embodiment feature or function described. While specific embodiments of, and examples for, the invention are described herein for illustrative purposes only, various equivalent modifications are possible within the spirit and scope of the invention, as those skilled in the relevant art will recognize and appreciate.

As indicated, these modifications may be made to the invention in light of the foregoing description of illustrated embodiments of the invention and are to be included within the spirit and scope of the invention. Thus, while the invention has been described herein with reference to particular embodiments thereof, a latitude of modification, various changes and substitutions are intended in the foregoing disclosures, and it will be appreciated that in some instances some features of embodiments of the invention will be employed without a corresponding use of other features without departing from the scope and spirit of the invention as set forth. Therefore, many modifications may be made to adapt a particular situation or material to the essential scope and spirit of the invention.

Reference throughout this specification to "one embodiment", "an embodiment", or "a specific embodiment" or similar terminology means that a particular feature, structure, or characteristic described in connection with the embodiment is included in at least one embodiment and may not necessarily be present in all embodiments. Thus, respective appearances of the phrases "in one embodiment", "in an embodiment", or "in a specific embodiment" or similar terminology in various places throughout this specification are not necessarily referring to the same embodiment. Furthermore, the particular features, structures, or characteristics of any particular embodiment may be combined in any suitable manner with one or more other embodiments. It is to be understood that other variations and modifications of the embodiments described and illustrated herein are possible in light of the teachings herein and are to be considered as part of the spirit and scope of the invention.

In the description herein, numerous specific details are provided, such as examples of components and/or methods, to provide a thorough understanding of embodiments of the invention. One skilled in the relevant art will recognize, however, that an embodiment may be able to be practiced without one or more of the specific details, or with other apparatus, systems, assemblies, methods, components, materials, parts, and/or the like. In other instances, well-known structures, components, systems, materials, or operations are not specifically shown or described in detail to avoid obscuring aspects of embodiments of the invention. While the invention may be illustrated by using a particular embodiment, this is not and does not limit the invention to any particular embodiment and a person of ordinary skill in the art will recognize that additional embodiments are readily understandable and are a part of this invention.

Embodiments discussed herein can be implemented in a set of distributed computers communicatively coupled to a network (for example, the Internet). Any suitable programming language can be used to implement the routines, methods, or programs of embodiments of the invention described herein, including C, C++, Java, JavaScript, HTML, or any other programming or scripting code, etc. Other software/hardware/network architectures may be used. Communications between computers implementing embodiments can be accomplished using any electronic, optical, radio frequency signals, or other suitable methods and tools of communication in compliance with known network protocols.

Although the steps, operations, or computations may be presented in a specific order, this order may be changed in different embodiments. In some embodiments, to the extent multiple steps are shown as sequential in this specification, some combination of such steps in alternative embodiments may be performed at the same time. The sequence of operations described herein can be interrupted, suspended, or otherwise controlled by another process, such as an operating system, kernel, etc. The routines can operate in an operating system environment or as stand-alone routines. Functions, routines, methods, steps, and operations described herein can be performed in hardware, software, firmware, or any combination thereof.

Embodiments described herein can be implemented in the form of control logic in software or hardware or a combination of both. The control logic may be stored in an information storage medium, such as a computer-readable medium, as a plurality of instructions adapted to direct an information processing device to perform a set of steps disclosed in the various embodiments. Based on the disclosure and teachings provided herein, a person of ordinary skill in the art will appreciate other ways and/or methods to implement the invention.

A "computer-readable medium" may be any medium that can contain, store, communicate, propagate, or transport the program for use by or in connection with the instruction execution system, apparatus, system, or device. The computer readable medium can be, by way of example only but not by limitation, an electronic, magnetic, optical, electromagnetic, infrared, or semiconductor system, apparatus, system, device, propagation medium, or computer memory. Such computer-readable medium shall generally be machine readable and include software programming or code that can be human readable (e.g., source code) or machine readable (e.g., object code). Examples of non-transitory computer-readable media can include random access memories, read-only memories, hard drives, data cartridges, magnetic tapes, floppy diskettes, flash memory drives, optical data storage devices, compact-disc read-only memories, and other appropriate computer memories and data storage devices.

As used herein, the terms "comprises," "comprising," "includes," "including," "has," "having," or any other variation thereof, are intended to cover a non-exclusive inclusion. For example, a process, product, article, or apparatus that comprises a list of elements is not necessarily limited only those elements but may include other elements not expressly listed or inherent to such process, product, article, or apparatus.

Furthermore, the term "or" as used herein is generally intended to mean "and/or" unless otherwise indicated. For example, a condition A or B is satisfied by any one of the following: A is true (or present) and B is false (or not present), A is false (or not present) and B is true (or present), and both A and B are true (or present). As used herein, a term preceded by "a" or "an" (and "the" when antecedent basis is "a" or "an") includes both singular and plural of such term, unless clearly indicated within the claim otherwise (i.e., that the reference "a" or "an" clearly indicates only the singular or only the plural). Also, as used in the description herein and throughout the meaning of "in" includes "in" and "on" unless the context clearly dictates otherwise.

## Claims

1. A computer-implemented method, comprising:
receiving, as input from one or more users via a developer interface, data defining a plurality of data sources and a plurality of mappings between data sources, each mapping specifying how data from a source at a first level of abstraction corresponds to data at a second level of abstraction;
generating, based on the received data, a semantic data graph comprising a plurality of nodes each representing a respective data source at a respective level of abstraction and a plurality of directed edges each representing a respective stored mapping between a source node and a destination node, wherein the plurality of nodes are organized into an ordered sequence of layers each corresponding to a distinct level of abstraction from raw data provided by devices;
determining, based on the layer organization of the semantic data graph, a default rendering scope comprising a data-source-level representation of each node of the plurality of nodes;
causing a display device to render, within the developer interface, a graph visualization of the semantic data graph based on the default rendering scope, wherein each node of the plurality of nodes is displayed as a collapsed element in the graph visualization; and
in response to a user interaction requesting detail for a first node of the plurality of nodes:
retrieving, from the semantic data graph, stored detail associated with the first node that was generated based on the data received from the one or more users; and
rendering the retrieved detail for the first node within the graph visualization.

2. The method of claim 1, wherein the ordered sequence of layers comprises a first layer, one or more intermediate layers, and a final layer, wherein:
each node of the first layer is displayed in the graph visualization as a semantic representation of data ingested from a specific device configuration,
each node of the one or more intermediate layers is displayed as a progressively more abstract semantic grouping of the data represented in the first layer, and
each node of the final layer is displayed as an application consuming data from the one or more intermediate layers.

3. The method of claim 1 or claim 2, wherein the stored detail associated with a node is organized into a hierarchy comprising a dataset level and a field level, and further comprising:
in response to a first user interaction requesting detail for a first node of the plurality of nodes:
retrieving, from the semantic data graph, one or more datasets generated for the first node based on the data received from the one or more users;
causing the display device to display, in the developer interface, the one or more datasets as sub-nodes within the first node in the graph visualization, wherein edges between dataset sub-nodes displayed based on stored mappings between datasets defined by the one or more users; and
in response to a second user interaction requesting detail for a first dataset sub-node of the one or more dataset sub-nodes:
retrieving, from the semantic data graph, one or more fields defined for the first dataset sub-node based on the data received from the one or more users; and
causing the display device to display, in the developer interface, the one or more fields within the first dataset sub-node in the graph visualization, with edges between fields rendered based on stored extraction function associations retrieved from the semantic data graph, each extraction function association specifying how a source field is transformed into a corresponding destination field as defined by the one or more users.

4. The method of claim 3, further comprising:
in response to a user selection of a selected node of the plurality of nodes, traversing the stored mappings of the semantic data graph from the selected node in both an upstream direction toward layers of lower abstraction and a downstream direction toward layers of higher abstraction to identify a set of participating nodes and edges forming an end-to-end data flow connected to the selected node; and
causing the display device to display the graph visualization with a visual distinction applied to the identified set of participating nodes and edges based on results of the traversal; and
in response to a subsequent user interaction requesting detail for a first participating node of the identified set of participating nodes:
retrieving stored detail for the first participating node from the semantic data graph; and
causing the display device to display the retrieved stored detail with the visual distinction preserved for the first participating node and any other participating nodes and edges of the identified set of participating nodes and edges rendered at the requested level of detail.

5. The method of claim 3 or claim 4, wherein the default rendering scope collapses each node across all layers of the ordered sequence to a single collapsed element regardless of the number of datasets or fields defined for that node in the semantic data graph.

6. The method of one of claims 1 to 5, further comprising:
receiving, from the one or more users via a rules interface, a criteria definition comprising one or more conditions to be evaluated against data and a scope specification identifying one or more data sources against whose associated datasets the one or more conditions are to be evaluated;
receiving, from the one or more users via the developer interface, a definition of a new data source and one or more mappings connecting the new data source to one or more existing nodes of the semantic data graph; and
storing the new data source and mappings in the semantic data graph such that data ingested from the new data source is transformed into one or more semantic representations corresponding to the one or more existing nodes; and
causing the display device to:
update the display of the rules interface to reflect the new data source as a contributing data source for each criteria definition associated with a given dataset to which the new data source contributes through the stored mappings, and
update the graph visualization to display the new data source as a new node connected to the one or more existing nodes by one or more new edges.

7. The method of one of claims 1 to 6, further comprising:
maintaining, in the semantic data graph, a plurality of stored mappings transforming raw data from a plurality of heterogeneous data sources each having a different data format into shared semantic representations at each layer of the ordered sequence of layers, such that data from each of the plurality of heterogeneous data sources is expressed in a common field representation at each layer regardless of the originating data format;
receiving, from the one or more users via the developer interface, a definition of a new data source and a mapping specifying how raw data from the new data source is transformed into the semantic representation of one or more nodes at a first layer of the ordered sequence of layers; and
storing the new data source and the mapping in the semantic data graph.

8. The method of claim 7, further comprising:
determining, based on the stored mappings of the semantic data graph, one or more additional mappings transforming the semantic representation of the raw data of the new data source at the first layer into the shared semantic representations of one or more nodes at each successive layer of the ordered sequence of layers; and
storing the one or more additional mappings in the semantic data graph such that data from the new data source is automatically expressed in the shared semantic representations at each layer of the ordered sequence of layers upon ingestion, without requiring the user to define mappings for each successive layer individually.

9. A system, comprising:
a processor; and
a non-transitory computer readable medium, including instructions for:
receiving, as input from one or more users via a developer interface, data defining a plurality of data sources and a plurality of mappings between data sources, each mapping specifying how data from a source at a first level of abstraction corresponds to data at a second level of abstraction;
generating, based on the received data, a semantic data graph comprising a plurality of nodes each representing a respective data source at a respective level of abstraction and a plurality of directed edges each representing a respective stored mapping between a source node and a destination node, wherein the plurality of nodes are organized into an ordered sequence of layers each corresponding to a distinct level of abstraction from raw data provided by devices;
determining, based on the layer organization of the semantic data graph, a default rendering scope comprising a data-source-level representation of each node of the plurality of nodes;
causing a display device to render, within the developer interface, a graph visualization of the semantic data graph based on the default rendering scope, wherein each node of the plurality of nodes is displayed as a collapsed element in the graph visualization; and
in response to a user interaction requesting detail for a first node of the plurality of nodes:
retrieving, from the semantic data graph, stored detail associated with the first node that was generated based on the data received from the one or more users; and
rendering the retrieved detail for the first node within the graph visualization.

10. The system of claim 9, wherein the ordered sequence of layers comprises a first layer, one or more intermediate layers, and a final layer, wherein:
each node of the first layer is displayed in the graph visualization as a semantic representation of data ingested from a specific device configuration,
each node of the one or more intermediate layers is displayed as a progressively more abstract semantic grouping of the data represented in the first layer, and
each node of the final layer is displayed as an application consuming data from the one or more intermediate layers.

11. The system of claim 9 or claim 10, wherein the stored detail associated with a node is organized into a hierarchy comprising a dataset level and a field level, and further comprising instructions for:
in response to a first user interaction requesting detail for a first node of the plurality of nodes:
retrieving, from the semantic data graph, one or more datasets generated for the first node based on the data received from the one or more users;
causing the display device to display, in the developer interface, the one or more datasets as sub-nodes within the first node in the graph visualization, wherein edges between dataset sub-nodes displayed based on stored mappings between datasets defined by the one or more users; and
in response to a second user interaction requesting detail for a first dataset sub-node of the one or more dataset sub-nodes:
retrieving, from the semantic data graph, one or more fields defined for the first dataset sub-node based on the data received from the one or more users; and
causing the display device to display, in the developer interface, the one or more fields within the first dataset sub-node in the graph visualization, with edges between fields rendered based on stored extraction function associations retrieved from the semantic data graph, each extraction function association specifying how a source field is transformed into a corresponding destination field as defined by the one or more users.

12. The system of claim 11, further comprising instructions for:
in response to a user selection of a selected node of the plurality of nodes, traversing the stored mappings of the semantic data graph from the selected node in both an upstream direction toward layers of lower abstraction and a downstream direction toward layers of higher abstraction to identify a set of participating nodes and edges forming an end-to-end data flow connected to the selected node; and
causing the display device to display the graph visualization with a visual distinction applied to the identified set of participating nodes and edges based on results of the traversal; and
in response to a subsequent user interaction requesting detail for a first participating node of the identified set of participating nodes:
retrieving stored detail for the first participating node from the semantic data graph; and
causing the display device to display the retrieved stored detail with the visual distinction preserved for the first participating node and any other participating nodes and edges of the identified set of participating nodes and edges rendered at the requested level of detail, and/or
wherein the default rendering scope collapses each node across all layers of the ordered sequence to a single collapsed element regardless of the number of datasets or fields defined for that node in the semantic data graph.

13. The system of one of claims 9 to 12, further comprising instructions for:
receiving, from the one or more users via a rules interface, a criteria definition comprising one or more conditions to be evaluated against data and a scope specification identifying one or more data sources against whose associated datasets the one or more conditions are to be evaluated;
receiving, from the one or more users via the developer interface, a definition of a new data source and one or more mappings connecting the new data source to one or more existing nodes of the semantic data graph; and
storing the new data source and mappings in the semantic data graph such that data ingested from the new data source is transformed into one or more semantic representations corresponding to the one or more existing nodes; and
causing the display device to:
update the display of the rules interface to reflect the new data source as a contributing data source for each criteria definition associated with a given dataset to which the new data source contributes through the stored mappings, and
update the graph visualization to display the new data source as a new node connected to the one or more existing nodes by one or more new edges.

14. The system of one of claims 9 to 13, further comprising instructions for:
maintaining, in the semantic data graph, a plurality of stored mappings transforming raw data from a plurality of heterogeneous data sources each having a different data format into shared semantic representations at each layer of the ordered sequence of layers, such that data from each of the plurality of heterogeneous data sources is expressed in a common field representation at each layer regardless of the originating data format;
receiving, from the one or more users via the developer interface, a definition of a new data source and a mapping specifying how raw data from the new data source is transformed into the semantic representation of one or more nodes at a first layer of the ordered sequence of layers; and
storing the new data source and the mapping in the semantic data graph; and
optionally further comprising instructions for:
determining, based on the stored mappings of the semantic data graph, one or more additional mappings transforming the semantic representation of the raw data of the new data source at the first layer into the shared semantic representations of one or more nodes at each successive layer of the ordered sequence of layers; and
storing the one or more additional mappings in the semantic data graph such that data from the new data source is automatically expressed in the shared semantic representations at each layer of the ordered sequence of layers upon ingestion, without requiring the user to define mappings for each successive layer individually.

15. A non-transitory computer readable medium, including instructions that, when executed by one or more processors, perform a method according to one of claims 1 to 8.
